# EUROPÄISCHE PATENTSCHRIFT

(11) **EP 4 204 495 B1**
(45) Veröffentlichungstag und Bekanntmachung des Hinweises auf die Patenterteilung: **05.03.2025**
(21) Anmeldenummer: 21769333.2
(22) Anmeldetag: 31.08.2021
(51) Int. Cl.: C08L 23/28, C08L 7/00, C08L 23/16, E01B 9/68

(54) **KAUTSCHUKZUSAMMENSETZUNG FÜR EINE SCHIENENZWISCHENLAGE**
RUBBER COMPOSITION FOR A RAIL INTERMEDIATE LAYER
COMPOSITION DE CAOUTCHOUC POUR COUCHE INTERMÉDIAIRE DE RAIL

(30) Priorität: 31.08.2020 AT 507372020
(43) Veröffentlichungstag der Anmeldung: 05.07.2023
(73) Patentinhaber: Bategu Gummitechnologie GmbH, 1190 Wien (AT)
(72) Erfinder: MESTAN, Gerhard, 1210 Wien (AT)
(74) Vertreter: Wildhack & Jellinek Patentanwälte GmbH
(86) Internationale Anmeldenummer: PCT/AT2021/060303
(87) Internationale Veröffentlichungsnummer: WO 2022/040717

(56) Entgegenhaltungen:
- CN-A- 108 752 836
- DE-A1- 102004 042 698
- DE-A1- 102016 111 064

## Beschreibung

Die Erfindung betrifft eine Kautschukzusammensetzung für Schienenzwischenlagen.

Schienenzwischenlagen werden zwischen Schiene und Schwelle eingelegt, um entweder Schwelle und Schotterbett zu schützen oder um die durch fahrende Züge verursachte Lärmemission zu vermindern.

Der Lärm entsteht durch das Überfahren der Gleisanlage und durch das Schwingen der Schiene, wobei die Schwingungen über das Gleis über weite Strecken übertragen werden. Die Lärmemission setzt sich aus niederfrequenten und hochfrequenten Schallwellen zusammen. Es wird angenommen, dass Lärm zu gesundheitlichen Beeinträchtigungen führt, sobald er über 55 dB beträgt. Ein vorbeifahrender Güterzug hat einen maximalen Schalldruckpegel von 96 dB bei 80km/h und in 7,5 m Querabstand. Bereits eine Verringerung der Lärmbelastung um 1 dB wird von vielen Personen als Verbesserung empfunden. Eine Reduktion von 3 dB wird als deutliche Verbesserung eingestuft. Eine Verringerung um 10 dB wird als 50 % Lärmreduktion empfunden.

Aus dem Stand der Technik sind unterschiedliche Typen von Schienenzwischenlagen bekannt:
Zum einen gibt es harte Zwischenlagen mit hoher Steifigkeit und geringer Elastizität. Harte Zwischenlagen weisen üblicherweise eine Härte von über 90 ShA und eine Dichte von etwa 1 g/cm³ auf. Die Rückprallelastizität harter Zwischenlagen liegt etwa bei 35 %. Hergestellt werden harte Zwischenlagen üblicherweise aus thermoplastischen Polymeren, z.B. aus Polyestern oder Polypropylen. Durch harte Zwischenlagen werden die Vibrationen nahezu ungedämpft ins Schotterbett weitergeleitet. Durch die hohe Federsteifigkeit der Zwischenlage hat die Schiene wenig Raum zum Schwingen, sodass die Schallübertragung über das Gleis verringert wird. Die Stöße, die beim Überfahren durch den Zug verursacht werden, werden kaum gedämpft. Schwelle und Schotterbett werden daher stark beansprucht.

Um Schwelle und Schotterbett zu schonen, wurden weiche Zwischenlagen entwickelt. Weiche Zwischenlagen haben eine sehr hohe Elastizität und geringere Hysterese. Weiche Zwischenlagen werden üblicherweise aus Elastomeren hergestellt. Sie weisen üblicherweise eine Härte von 65 bis 70 ShA auf, die Dichte liegt bei 1,1 - 1,2 g/cm³ und die Rückprallelastizität bei 50 %. Durch die Elastizität der Zwischenlage werden Schläge durch den fahrenden Zug besser gedämpft. Die Schwelle und das Schotterbett werden dadurch geschont. Da die Schiene durch die elastische Zwischenlage nur wenig am Schwingen gehindert wird, kommt es vermehrt zu hochfrequenten Schallemissionen. Die Lärmbelastung ist daher wesentlich höher.

Generell ist es notwendig, dass die Schienenzwischenlage eine gute Alterungs- und Witterungsbeständigkeit aufweist, wobei insbesondere eine geringe Wasseraufnahme und eine sehr gute UV- und Ozonbeständigkeit gefordert werden. Weiters sollte sich die Federrate bei unterschiedlichen Temperaturen nicht wesentlich verändern, wobei vor allem ein Temperaturbereich von ca. - 25 °C bis ca. 50 °C relevant ist. Die Schienenzwischenlage sollte Belastungen durch die Züge bei den zu erwartenden klimatischen Bedingungen standhalten und eine hohe Haltbarkeit aufweisen, um den Wartungsaufwand für eine Gleisanlage möglichst zu minimieren. Dabei sollte neben einer geringen Belastung der Gleisanlage auch eine Reduktion der Schallemission erreicht werden. Da für eine Schienenstrecke eine große Anzahl an Zwischenlagen benötigt wird, sollte die Zwischenlage einfach herstellbar sein. Weiters sollten sie mit bestehenden Systemen kompatibel sein um auch einen nachträglichen Einbau in bestehende Gleisstrecken zu ermöglichen.

Schließlich ist es auch notwendig, dass Abrieb- oder Zersetzungsprodukte möglichst keine umweltgefährdende Wirkung aufweisen, insbesondere, weil Gleisstrecken teilweise auch in sensiblen Gebieten, wie z.B. Wasserschutzgebieten, verlegt werden. Die verwendeten Rohstoffe sollten daher nicht in der Liste der sehr besorgniserregenden Substanzen (SVHC) des europäischen Chemikaliengesetzes angeführt sein und sollten auch nicht in der Railway Industry Substances List der UNIFE aufscheinen.

Um diesen Anforderungen gerecht zu werden, wurden beispielsweise Schienenzwischenlagen vorgeschlagen, die aus unterschiedlichen Materialen zusammengesetzt sind.

DE 202012002484 U1 zeigt beispielsweise Schienenzwischenlagen mit Schichten aus unterschiedlichen Materialen.

WO 2019157540 zeigt eine Schienenzwischenlage umfassend ein geschäumtes Elastomer und Korkgranulat.

Eine Schienenzwischenlage mit einer speziellen Form ist in DE 2016 111 064 A1 beschrieben.

Bekannte Schienenzwischenlagen sind in der Herstellung vergleichsweise aufwendig. Dennoch konnten die Anforderungen an die Lärmreduktion bei gleichzeitiger Dämpfung der mechanischen Belastungen bisher nicht vollständig erfüllt werden.

Aufgabe der Erfindung ist es daher eine Kautschukzusammensetzung bereitzustellen, die eine einfache Herstellung einer Schienenzwischenlage ermöglicht, die gute Dämpfungseigenschaften bei mechanischen Belastungen aufweist, und die gleichzeitig eine Schallreduktion ermöglicht.

Gelöst wird diese Aufgabe durch eine schwefelvernetzbare Kautschukzusammensetzung für eine Schienenzwischenlage, wobei die polymere Komponente einen halogenierten Butylkautschuk und zumindest einen weiteren Kautschuk umfasst, wobei der weitere Kautschuk ausgewählt ist aus den Elastomeren der Gruppen R oder M, die zumindest eine Doppelbindung enthalten, wobei der halogenierte Butylkautschuk mit 40 bis 60 phr, insbesondere mit 50 phr, enthalten ist, wobei zumindest ein Schwefelvernetzer enthalten ist, und wobei zumindest ein Füllstoff mit einer Dichte von zumindest 4 g/cm³ enthalten ist, wobei die Gesamtmenge an Füllstoff mit einer Dichte von zumindest 4 g/cm³ 50 bis 100 phr beträgt, und wobei zumindest ein leichter Füllstoff mit einer Dichte von weniger als 4 g/cm³ enthalten ist, wobei die leichten Füllstoffe eine spezifische Oberfläche (BET) von maximal 50 m²/g aufweisen.

Aus dieser Kautschukzusammensetzung kann durch bekannte Vernetzungsmethoden ein massiver, einphasiger Werkstoff hergestellt werden, der die für eine Schienenzwischenlage notwendigen Eigenschaften aufweist. Die Kautschukzusammensetzung ermöglicht die einfache Herstellung eines Werkstoffs mit wenig elastischen Eigenschaften und mit großer Hysterese im Temperaturbereich von - 25 bis 50 °C. Die Form des durch Vernetzung der Kautschukzusammensetzung hergestellten Werkstoffs kann den jeweils gegebenen Anforderungen entsprechend gewählt werden, sodass eine Schienenzwischenlage bereitgestellt werden kann, die mit dem jeweils bestehenden System kompatibel ist.

Eine aus der Kautschukzusammensetzung hergestellte Schienenzwischenlage weist gute Dämpfungseigenschaften im gesamten Frequenzbereich auf, also sowohl im niederfrequenten, als auch im hochfrequenten Bereich, und bewirkt eine Schallreduktion, sodass sowohl die Abnutzung des Gleisoberbaus als auch die Lärmemission reduziert werden. Die Kautschukzusammensetzung ermöglicht eine Abschwächung von Stößen, Vibrationen und Schwingungen im unhörbaren und hörbaren Bereich. Mechanische Belastungen, wie Stöße, Schwingungen und Vibrationen können daher gedämpft werden und Schallemissionen durch ein Schwingen der Schienen können reduziert werden.

Durch die Kautschukzusammensetzung wird daher gleichzeitig eine Dämpfung mechanischer Belastungen, als auch eine Schallreduktion erreicht. Zudem werden die Fahrgeräusche und Vibrationen im Inneren des Zuges reduziert, sodass der Fahrkomfort für Passagiere in Personenzügen erhöht ist.

Durch die vorteilhafte Federsteifigkeit und Dämpfung der erfindungsgemäßen Kautschukzusammensetzung kann die bei der Überfahrt eines Zuges entstehende Belastung teilweise abgefedert werden, sodass Schwelle und Schotterbett geschont werden. Gleichzeitig wird auch ein Schwingen der Schiene vermieden, das zu einer hohen Geräuschemission führen würde, womit eine gute Schallreduktion erzielt wird.

Durch die erfindungsgemäße Kautschukzusammensetzung können die Schwingungen und Vibrationen reduziert werden, indem die Bewegungsenergie teilweise in Wärme umgewandelt wird. Dies führt zu einer Reduktion von Stößen, Schwingungen und Vibrationen im gesamten Frequenzbereich, sodass eine gute Dämpfung der beim Überrollen der Schiene auftretenden mechanischen Belastung erreicht wird, was die Schonung von Schiene und Schotterbett bewirkt, und gleichzeitig eine Verringerung des Schienenschalls erreicht wird, sodass es zu einer Verringerung der Lärmreduktion kommt.

Die Kautschukzusammensetzung ist zudem besonders einfach zu verarbeiten. Dadurch, dass eine einphasige Mischung bereitgestellt werden kann, ist auch die Weiterverarbeitung zu Dämpfungselementen bzw. Schienenzwischenlagen ohne großen Aufwand möglich. Mit dieser Kautschukzusammensetzung lassen sich durch einfache Herstellungsverfahren gleichzeitig sehr gute mechanische Eigenschaften und eine verbesserte Schallreduktion erzielen. Die Kautschukzusammensetzung ermöglicht somit eine einfache Herstellung einer Schienenzwischenlage mit guten Dämpfungseigenschaften für mechanische Belastungen und mit guten Schallreduktionseigenschaften.

Die Kautschukzusammensetzung erzielt gute Dämpfungseigenschaften und eine Schallreduktion über den gesamten relevanten Temperaturbereich, da die Elastizität im Bereich zwischen -25 °C bis 50°C besonders konstant und niedrig ist. Zudem ist eine gute Witterungsbeständigkeit gegeben.

Halogenierter Butylkautschuk, bzw. Isobuten-Isopren-Kautschuk ist ein Copolymerisat der folgenden Formel aus 95 bis 99,5 Gew.% Isobuten (m) und 0,5 bis 5 Gew.% Isopren (n):

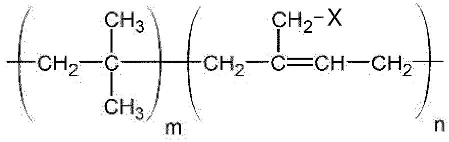

Nach DIN ISO 1629 : 2015 - 3 werden Elastomere anhand der Zusammensetzung der Hauptkette eingeteilt. Elastomere der M-Gruppe weisen eine gesättigte Hauptkette auf. Elastomere mit ungesättigter Hauptkette werden in der R-Gruppe zusammengefasst.

Die Mengenangaben in phr beziehen sich auf 100 Massenteile Kautschuk. Für eine binäre Mischung sind somit bei 40 phr halogeniertem Butylkautschuk 60 phr des weiteren Kautschuks enthalten, bzw. bei 60 phr des halogenierten Butylkautschuks sind 40 phr des weiteren Kautschuks enthalten.

Die Mengenangaben der Füllstoffe sind ebenfalls auf 100 Massenteile Gesamtkautschuk bezogen.

Füllstoffe werden üblicherweise in der Matrix dispergiert. Aktive oder verstärkende Füllstoffe verändern durch die Anbindung der Kautschukmoleküle an die Oberfläche der Füllstoffe die mechanischen Eigenschaften der Elastomere. Inaktive Füllstoffe bewirken keine oder nur geringe Veränderungen der mechanischen Eigenschaften des Kautschuks.

Vorteilhafte Merkmale werden in den abhängigen Ansprüchen angegeben:
Die Kautschukzusammensetzung kann als homogener Blend bereitgestellt werden. Wenn die polymeren Komponenten miteinander eine im Wesentlichen, insbesondere sowohl makroskopisch als auch lichtmikroskopisch, einphasige und homogene Mischung bilden, das heißt also ohne mit dem freien Auge und/oder lichtmikroskopisch sichtbare Phasentrennung, ergeben sich besonders vorteilhafte mechanische Eigenschaften der Kautschukzusammensetzung, insbesondere hinsichtlich des elastisch-dynamischen Charakters. Darunter wird hier verstanden, dass die Mischung vorteilhafterweise so einphasig ist, dass die Kautschukzusammensetzung nach der Vernetzung keine Elastomerpartikel mit einem mittleren Teilchendurchmesser von mehr als 0,5 µm, insbesondere von mehr als 0,1 µm, vorzugsweise mehr als 0,01 µm, und/oder keine Kautschukdomänen mit einem mittleren Durchmesser von mehr als 0,5 µm, insbesondere von mehr als 0,1 µm, vorzugsweise mehr als 0,01 µm, aufweist. Die Kautschukzusammensetzung bildet nach Vernetzung vorzugsweise gar keine erkennbaren oder detektierbaren Polymerpartikel oder Kautschukdomänen aus.

Die Herstellung einer Schienenzwischenlage ist besonders einfach, wenn die Kautschukzusammensetzung als halogenierten Butylkautschuk Brombutylkautschuk enthält. Brombutylkautschuk (BIIR) kann besonders schnell vulkanisiert werden und es kann mit einem geringeren Einsatz an Vulkanisationschemikalien gearbeitet werden.

Der weitere Kautschuk ist vorzugsweise halogenfrei.

Als weiterer Kautschuk sind Polymere mit einer Glasübergangstemperatur von maximal - 50 °C besonders geeignet. Die Glasübergangstemperatur kann über eine Dynamisch mechanische Analyse (DMA) gemessen und aus der Schubmodul - Temperatur - Funktion abgeleitet werden.

Die Verarbeitung ist besonders einfach, wenn der weitere Kautschuk ausgewählt ist aus einer Gruppe umfassend Naturkautschuk (IR), synthetischem Polyisopren (IR) oder Styrolbutadienkautschuk (SBR), insbesondere mit einem Styrolgehalt von maximal 23,5 Gew. %, vorzugsweise mit einem Styrolgehalt von 15 Gew. %. Der Werkstoff erhält dadurch besonders gute Dämpfungseigenschaften und eine besonders gute Schallreduktion, insbesondere im tiefen Temperaturbereich.

Naturkautschuk wird aus dem Kautschukbaum gewonnen und enthält Polyisopren mit cis-1,4 Konfiguration. Synthetisches Polyisopren kann beispielsweise durch Polymerisation of 2-Methyl-1,3-Butadien mit Ziegler-Natta-Katalysator erhalten werden.

Die allgemeine Formel lautet:

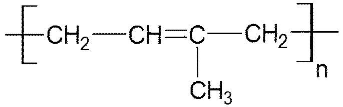

Während Naturkautschuk fast ausschließlich das cis-1,4 Polymer enthält, ist synthetisches Polyisopren eine Mischung aus cis-1,4, trans-1,4 and 3,4 Polymer, wobei das cis-1,4 Polymer üblicherweise 90 bis 98 Gew. % ausmacht. Polyisopren mit einem höheren cis-1,4 Anteil weist üblicherweise eine niedrigere Glasübergangstemperatur auf und eine bessere mechanische Stabilität. Die mechanischen Eigenschaften von Naturkautschuk sind daher zumeist etwas besser, als die mechanischen Eigenschaften von synthetischem Polyisopren.

SBR hat die folgende Formel: 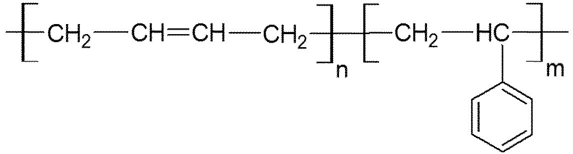 wobei n die Zahl der Butandieen-Gruppen angibt und m für die Zahl der Styrol-Gruppen steht. Die Gruppen sind im Copolymerisat zufällig verteilt.

Auch eine Kautschukmischung, bei der der weitere Kautschuk Ethylen-Propylen-DienKautschuk (EPDM) ist, ist leicht zu verarbeiten. Die Dämpfungseigenschaften und die Schallreduktion sind, vor allem im tiefen Temperaturbereich, besonders gut, wenn EPDM mit einem Polyethylengehalt von 45 bis 55 Gew. % enthalten ist.

EPDM hat die folgende allgemeine Formel: 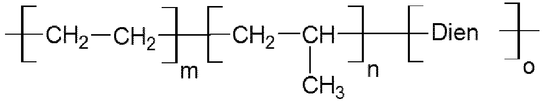 wobei m für die Zahl der Ethylengruppen steht, n für die Zahl der Propylen-Gruppen und o die Zahl der Dien-Gruppen angibt.

Vorzugsweise sind die Dien-Einheiten ausgewählt aus der Gruppe von 1,3-Butadien, 2-Methyl-1,3-butadien (Isopren), 2,3-Dimethyl-1,3-butadien, 1,3-Pentadien, 1,3-Cyclopentadien, Dicyclopentadien, 2-Methyl-1,3-pentadien, 1,3-Hexadien, 1,4-Hexadien, 1,4-Cyclohexadien, Tetrahydroinden, Methyl Tetrahydroinden, Ethylidennorbornen bzw. 5-Ethyliden-2-norbornen (ENB), 5-Methylen-2-norbornen (MNB), 1,6 Octadien, 5-Methyl-1,4-hexadien, 3,7-dimethyl-1,6-octadien, 5-iso-Propyliden-2-norbornen, 5-Vinyl-2-norbornen (VNB).

Besonders vorteilhaft ist es dabei, wenn der Ethylen-Propylen-Dien-Monomer-Kautschuk (EPDM) ein Terpolymer aus Ethylen, Propylen und 5-Ethyliden-2-norbornen (ENB) oder Dicyclopentadien (DCPD) ist.

Besonders einfach ist die Verarbeitung, wenn die polymere Komponente ausschließlich aus halogeniertem Butylkautschuk und dem weiteren Kautschuk besteht, wenn also eine binäre Polymermischung vorliegt.

Die Dämpfungseigenschaften und die Schallreduktion des Werkstoffes sind besonders gut und über den Temperaturbereich von -25 °C bis 50 °C besonders konstant, wenn die polymere Komponente ausschließlich aus halogeniertem Butylkautschuk, insbesondere Brombutylkautschuk, und Naturkautschuk oder synthetischem Polyisopren als einzige Bestandteile besteht. Als besonders vorteilhaft hat sich eine binäre Mischung aus 50 phr Naturkautschuk und 50 phr Brombutylkautschuk herausgestellt.

Alternativ werden gute Dämpfungseigenschaften und eine gute Schallreduktion auch erzielt, wenn die polymere Komponente aus halogeniertem Butylkautschuk, insbesondere Brombutylkautschuk, und Styrolbutadienkautschuk, insbesondere mit einem Styrolgehalt von maximal 23,5 Gew.%, vorzugsweise mit einem Styrolgehalt von 15 Gew.%, als einzige Bestandteile der polymere Komponente besteht.

Auch wenn die polymere Komponente nur aus halogeniertem Butylkautschuk, insbesondere Brombutylkautschuk, und EPDM, insbesondere mit einem Polyethylengehalt von 45 bis 55 Gew.%, besteht, werden besonders gute Dämpfungseigenschaften und eine besonders gute Schallreduktion erreicht.

Wenn die polymere Komponente ausschließlich aus EPDM und Brombutylkautschuk besteht, ist die Kautschukmischung besonders einfach herzustellen, da keine Alterungs- oder Ozonschutzmittel notwendig sind um eine lange Haltbarkeit zu erreichen.

Um eine zu starke Eigenerwärmung zu vermeiden, kann vorgesehen sein, dass keine hochaktiven Verstärkerstoffe enthalten sind. Diese könnten aufgrund ihrer Oberflächenstruktur zu einem Anstieg des Spannungswertes bei 100 % Bruchdehnung (nach DIN 53504 : 2017 - 03) und zu einem schlechteren Rückstellverhalten führen. Bei zu starker Eigenerwärmung könnte es bei dynamischer Belastung zu einer Depolymerisation kommen, die zur Zerstörung des Werkstoffes führen würde.

Um einen Anstieg der Spannungswerte bei 100 % und einen Abfall der Bruchdehnung auch bei höheren Dosierungen zu vermeiden, ist es daher vorteilhaft, wenn die enthaltenen Füllstoffe inaktiv sind. Besonders vorteilhaft ist es, wenn alle Füllstoffe inaktiv sind. Als inaktive Füllstoffe, werden Füllstoffe bezeichnet, die eine Anbindung der Kautschukmoleküle an der Oberfläche der Füllstoffe vermeiden und somit das Fließen der Kautschukmischung vor der Formgebung nicht behindern.

Die Elastizität der polymeren Komponente sollte durch die Füllstoffe möglichst wenig beeinflusst werden. Besonders geeignet sind daher Füllstoffe, die eine spezifische Oberfläche (BET) von maximal 50 m²/g aufweisen. Die spezifische Oberfläche (BET) kann nach DIN ISO 9277 : 2014 - 01 bestimmt werden.

Der gleiche Effekt kann erzielt werden, wenn die schweren Füllstoffe eine Teilchengröße (d₅₀) von zumindest 1000 aufweisen. Bei einer großen Teilchengröße wird die Vernetzung der Polymere wenig beeinflusst, sodass sich die Elastizität kaum ändert und die Füllstoffe sich bezüglich der Vernetzung inaktiv verhalten.

Durch die Zugabe von inaktiven Füllstoffen ist die Kautschukzusammensetzung einfacher zu verarbeiten, da die Bildung von Lufteinschlüssen während der Verarbeitung vermieden werden kann.

Weiters können durch die Zugabe von inaktiven Füllstoffen Kosten gesenkt werden, da die Füllstoffe üblicherweise kostengünstiger sind als die Polymere.

Die Verarbeitung der Kautschukzusammensetzung ist besonders einfach, wenn als schwerer Füllstoff mit einer Dichte von zumindest 4 g/cm³ Bariumsulfat und/oder Eisenoxid und/oder Lithopone enthalten ist. Diese Füllstoffe können auch in größeren Dosierungen angewendet werden, ohne dass es zu einer Überfüllung kommt, die sich durch einen Anstieg des Spannungswertes bei 100 % mit gleichzeitigem Abfall der Bruchdehnung äußert. Ein aus dieser Kautschukzusammensetzung gefertigtes Dämpfungselement wirkt daher besonders gut schallreduzierend und stoßdämpfend. Als besonders vorteilhaft hat sich eine binäre polymere Komponente aus 50 phr Naturkautschuk und 50 phr Brombutylkautschuk erwiesen, wobei Bariumsulfat, insbesondere 100 phr Bariumsulfat, enthalten ist.

Die Verarbeitung der Kautschukzusammensetzung wird weiter vereinfacht, wenn zumindest ein leichter Füllstoff mit einer Dichte von weniger als 4 g/cm³ enthalten ist. Diese Füllstoffe ermöglichen eine besonders einfache Einstellung der Härte. Für Schienenzwischenlagen ist es besonders vorteilhaft, wenn leichte Füllstoffe mit einer Dichte von weniger als 4 g/cm³ mit einem Gesamtgehalt von 20 bis 60 phr enthalten sind, da dadurch die gewünschte Härte besonders einfach erreicht werden kann.

Besonders einfach zu verarbeiten ist eine Kautschukzusammensetzung, wobei als leichter Füllstoff mit einer Dichte von weniger als 4 g/cm³ Carbon black, insbesondere Carbon black N550 oder N990, enthalten ist.

Weiters ist es vorteilhaft, wenn als Füllstoff mit einer Dichte von weniger als 4 g/cm³ ein Kieselsäure-Derivat, insbesondere oberflächenbehandelte Kieselsäure, enthalten ist. Erfindungsgemäß weisen die leichten Füllstoffe eine spezifische Oberfläche (BET) von maximal 50 m²/g auf. Die spezifische Oberfläche (BET) kann nach DIN ISO 9277 : 2014 - 01 bestimmt werden.

Als besonders vorteilhaft hat sich eine Zusammensetzung umfassend 50 phr Naturkautschuk und 50 phr Brombutylkautschuk, sowie 100 phr schwerem Füllstoff mit einer Dichte von zumindest 4 g/cm³, insbesondere 100 phr Bariumsulfat, und 50 phr leichten Füllstoffen mit einer Dichte von weniger als 4 g/cm³ erwiesen, wobei alle Füllstoffe eine spezifische Oberfläche (BET) von maximal 50 m²/g aufweisen.

Weitere Additive wie Alterungs- und Ozonschutz können zugegeben werden, wobei dies insbesondere vorgesehen sein kann, wenn Naturkautschuk in der polymeren Komponente enthalten ist.

Wenn nur ein geringer Weichmacheranteil enthalten ist, werden die Eigenschaften der polymeren Komponente kaum verändert und auch die Temperaturabhängigkeit der Härte wird kaum verändert. Ein aus der Kautschukzusammensetzung hergestellter Werkstoff ist dann besonders haltbar, da eine Verhärtung des Vulkanisats während der Lebensdauer vermieden wird. Besonders vorteilhaft ist es daher, wenn Weichmacher mit 0 bis 10 phr, insbesondere 2,5 bis 7,5 phr, enthalten ist. Bei der zuvor beschriebenen Zusammensetzung umfassend 50 phr Brombutylkautschuk und 50 phr Naturkautschuk, 100 phr schwerem Füllstoff und 50 phr leichten Füllstoffen, hat sich ein Weichmacheranteil von 7,5 phr als besonders günstig erwiesen.

Um die Weiterverarbeitung und Vernetzung der Kautschukzusammensetzung zu vereinfachen und zu beschleunigen, ist ein Schwefel oder Schwefelspender als Vernetzer enthalten. Dadurch werden besonders konstante Ergebnisse bei der Verarbeitung erzielt und es kann kostengünstig ein Werkstoff mit guten Dämpfungseigenschaften und einer guten Schallreduktion bereitgestellt werden. Über das Mengenverhältnis von Schwefel, Schwefelspendern und Beschleunigern und die Art der Beschleuniger können die Länge der Schwefelnetzbrücken und die Netzwerkdichte beeinflusst werden.

Als besonders vorteilhaft hat sich eine Zusammensetzung umfassend 50 phr Brombutylkautschuk und 50 phr Naturkautschuk mit 100 phr schwerem Füllstoff erwiesen, wobei die Zusammensetzung einen Schwefelvernetzer enthält.

Um die Verarbeitung weiter zu vereinfachen und die Vulkanisationszeit zu verkürzen, kann zumindest ein Ultrabeschleuniger, insbesondere aus der Gruppe der Thiurame, vorzugsweise TBzTD (Tetrabenzylthiuramdisulfid), enthalten sein, und zumindest ein Semiultrabeschleuniger, insbesondere aus der Gruppe der Thiazole, vorzugsweise MBTS (basierend auf Dibenzothiazyldisulfid), enthalten sein.

Zusätzlich kann zumindest ein, insbesondere verzögerter Beschleuniger, insbesondere aus der Gruppe der Sulfenamide, vorzugsweise CBS (basierend auf N-Cyclohexyl-2-benzothiazyl-sulfenamid), enthalten sein. Dadurch kann die Länge der Inkubationsphase besonders einfach gesteuert werden. Dies ist vor allem für Kautschukzusammensetzungen relevant, deren polymere Komponente EPDM enthält.

Erfindungsgemäß ist auch eine vernetzte Kautschukmischung, aus einer zuvor beschrieben Kautschukzusammensetzung. Der durch Vernetzung der Kautschukzusammensetzung erhaltene Werkstoff weist besonders gute Dämpfungseigenschaften bei mechanischen Belastungen und eine besonders gute Schallreduktion auf, da er in einem Temperaturbereich von -25 °C bis 50 °C eine große Hysterese aufweist. Besonders geeignet ist eine schwefelvernetzte Kautschukzusammensetzung. Vorzugsweise liegt die vernetzte Kautschukzusammensetzung einphasig vor, da die Schallreduktion und die Dämpfungseigenschaften für mechanische Stöße mit einem massiven Werkstoff besonders ausgeprägt sind.

Aufgabe ist es weiters ein Dämpfungselement, insbesondere eine Schienenzwischenlage, bereitzustellen, das bzw. die eine gute Schallreduktion erzielt und stoßdämpfende Eigenschaften aufweist. Einerseits soll das Dämpfungselement durch mechanische Belastungen entstehende Stöße abfangen, insbesondere um den Gleisoberbau zu schonen, gleichzeitig soll durch das Dämpfungselement ein Schwingen des darauf gelagerten Bauteils bzw. der Schiene verringert werden, da durch die Schwingungen Schallwellen entstehen, die weit übertragen werden können.

Erfindungsgemäß ist daher auch ein Dämpfungselement aus einer zuvor beschriebenen vernetzten Kautschukmischung. Eine besonders gute Schallreduktion und besonders gute Dämpfungseigenschaften für mechanische Belastungen, insbesondere Stöße, erzielt das Dämpfungselement bzw. die Schienenzwischenlage, wenn es eine Dichte von 1,40 bis 1,65 g/cm³ und einer Härte von 50 bis 65 ShA (bei 23°C) aufweist. Vorteilhaft ist in diesem Zusammenhang auch eine Rückprallelastizität bei 23°C von maximal 30 %. Dadurch werden gleichzeitig eine gute Schallreduktion und eine gute Stoßdämpfung erreicht. Gleichzeitig werden die Fahrgeräusche im Inneren eines Zuges reduziert und der Komfort für die Passagiere von Personenzügen wird erhöht.

Dabei sind die Dämpfungseigenschaften und die Schallreduktion besonders vorteilhaft, wenn die Kautschukmischung ungeschäumt vorliegt. Die Schallreduktion und die Dämpfungseigenschaften sind daher besonders gut, wenn der Werkstoff des Dämpfungselements massiv ausgebildet ist, insbesondere im Wesentlichen ohne sichtbare Lufteinschlüsse.

Erfindungsgemäß ist weiters eine Schienenzwischenlage vorgesehen, insbesondere wie zuvor beschrieben, mit einer Dichte von 1,40 bis 1,65 g/cm³ und einer Härte von 50 bis 65 ShA (bei 23°C), wobei die Schienenzwischenlage zumindest zwei Bereiche mit unterschiedlicher Dicke aufweist.

Die Form einer Schienenzwischenlage ist zunächst von der Schiene und der Schwelle abhängig. Beispielsweise kann für eine UIC54-Schiene eine Platte mit einer Länge von etwa 160 mm und einer Breite von 125 mm vorgesehen sein, bzw. für eine UIC60-Schiene eine Platte mit einer Breite von 150 mm. Die Maße richten sich somit nach der Breite der Schiene. Die Höhe liegt üblicherweise etwa bei 7 mm.

Durch die Form können Kriterien wie Federsteifigkeit, Durchrutschwiderstand, und Dauerfestigkeit beeinflusst werden. Diese Kriterien ergeben sich aus der Art der Anwendung und sind in spezifischen Normen festgelegt. So sind beispielsweise für Hochgeschwindigkeitsstrecken, Strecken mit engen Gleisradien oder Strecken mit weiten Gleisradien unterschiedliche Kriterien vorgegeben. Bei der Verwendung der zuvor beschriebenen Kautschukzusammensetzung können diese Kriterien erfüllt werden, wobei die Feinabstimmung durch die Formgebung der Schienenzwischenlage erreicht werden kann. Dabei hat es sich als vorteilhaft erwiesen, wenn verschiedene Bereiche mit unterschiedlicher Dicke vorgesehen sind.

Es kann vorgesehen sein, dass das Dämpfungselement an der Oberseite und/oder an der Unterseite Ausnehmungen aufweist, in deren Bereich die Dicke verringert ist. Besonders effektiv wird die Federsteifigkeit beeinflusst, wenn die Ausnehmungen abwechselnd an der Oberseite und an der Unterseite angeordnet sind.

Eine Schienenzwischenlage die an ihrer Oberseite und/oder an ihrer Unterseite in Längsrichtung, also insbesondere parallel zum Schienenverlauf, rillenförmige, insbesondere gerade, Ausnehmungen aufweist, wobei die Schienenzwischenlage im Bereich der Ausnehmungen eine reduzierte Dicke aufweist, erzielt eine besonders gute Schallreduktion und hat besonders gute Dämpfungseigenschaften. Damit werden die mechanischen Belastungen der Schwelle und des Schotterbettes verringert und gleichzeitig wird die Lärmemission verringert.

Durch die Ausnehmungen kann das Dämpfungselement bzw. die Schienenzwischenlage im Belastungsfall ausweichen bzw. einfedern. Als vorteilhaft erwiesen haben sich Rillen mit einem gleichschenkelig trapezförmigen Querschnitt. Dadurch, dass die Ausnehmungen parallel zur Schienenrichtung verlaufen, kann die verdrängte Luft beim Ausweichen des Dämpfungselements bei Belastung einfach entweichen.

Ein rechteckiger Querschnitt der Rillen bewirkt zu Beginn der Belastung eine größere Einfederung und bei höherer Belastung eine stark progressive Federkennlinie im relevanten Bereich. Der trapezförmige Querschnitt hingegen bewirkt im relevanten Bereich eine weniger progressive Federkennlinie. Bei dieser Formgebung ist die Synergie von Werkstoff und Formgebung daher besonders ausgeprägt.

Besonders gute Dämpfungseigenschaften und eine besonders gute Schallreduktion weist eine Schienenzwischenlage auf, die parallel zur Schieneauflage verlaufende Stege mit im Vergleich zu anderen Bereichen der Schienenzwischenlage erhöhter Dicke aufweist, wobei insbesondere vorgesehen ist, dass seitliche Randbereiche und/oder ein Mittelbereich mit erhöhter Dicke vorgesehen ist. Die restlichen Bereiche, die eine geringer Dicke aufweisen, können als Verbindungsbereiche bezeichnet werden. Die Schienenauflage kann vorteilhafterweise durch die Verbindungsbereiche gebildet werden.

Besonders einfach und kostengünstig ist ein Verfahren zur Herstellung einer zuvor beschriebenen vernetzten Kautschukzusammensetzung, insbesondere eines Dämpfungselements bzw. einer Schienenzwischenlage, wobei die Vulkanisation bei 150 °C bis 180 °C, insbesondere bei 170 °C, erfolgt.

Die Herstellung ist besonders rasch und einfach, wenn die Vernetzung im Kompressionsverfahren erfolgt und die Verweilzeit in der Vulkanisationsform 4 bis 20 min, insbesondere 5 min, beträgt. Alternativ kann die Herstellung im Spritzgussverfahren erfolgen und die Verweilzeit in der Vulkanisationsform 2 bis 8 min betragen. Beides erlaubt die rasche Herstellung eines Werkstoffes, bzw. eines Dämpfungselements, insbesondere einer Schienenzwischenlage, mit großer Hysterese und guten Dämpfungseigenschaften, das eine gute Schallreduktion erzielt.

Die Erfindung wird anhand der folgenden Versuche und der folgenden Zeichnungen beispielhaft dargestellt, ohne den erfinderischen Gedanken durch diese Erläuterungen einzuschränken.

### Beispiele:

Es wurden Vergleichsversuche mit unterschiedlicher polymerer Komponente und unterschiedlichen Füllstoffen und Füllstoffgehalten durchgeführt.

Dabei wurden binäre Mischungen aus Brombutylkautschuk und einem weiteren Kautschuk hergestellt. Zur Herstellung der Kautschukmischung wurde zunächst auf einem Laborwalzwerk ein Walzfell aus der polymeren Komponente gebildet. Um die Homogenität sicherzustellen, wurde vor Zugabe der Zuschlagstoffe das Mischungsfell abwechselnd dreimal von links und rechts bis zu etwa 3/4 der Walzenbreite im Winkel von etwa 45° eingeschnitten und die so abgenommene Mischung wieder auf der anderen Seite aufgegeben, im folgenden 3x links und rechts Einschneiden genannt.

Anschließend wurden die Stearinsäure und die Füllstoffe zugegeben und am Ende wieder jeweils dreimalig links und rechts eingeschnitten. Als Füllstoffe wurden inaktive Füllstoffe verwendet, um möglichst kleine Spannungswerte bei 100 % Dehnung zu erhalten und somit wenig Einfluss auf die Hysterese zu nehmen.

Dann wurden Beschleuniger und Zinkoxid zugegeben und nochmals am Ende jeweils dreimalig links und rechts eingeschnitten. Zuletzt wurde sechsmal gestürzt und das Mischungsfell abgenommen.

Alternativ erfolgte auch eine Herstellung in einem Innenmischer. Dazu wurden die Polymere der polymeren Komponente verschnitten und für 2 min gemischt. Nach Zugabe der Stearinsäure und der Füllstoffe wurde nochmals 2 min gemischt und der Kneter abgekehrt. Daraufhin erfolgte die Zugabe der Beschleuniger und des Zinkoxids, woraufhin nochmals 1 min gemischt wurde und der Kneter nochmals abgekehrt wurde. Nach dem Auswurf wurde für 2 min am Stockblender homogenisiert. Die Mischungsfelle wurden abgenommen und es erfolgte eine Ablage der Kautschukzusammensetzung.

Zur Herstellung der Prüfkörper wurde die Kautschukzusammensetzung im Kompressionsverfahren für 5 min bei 170° C vernetzt.

Als Prüfkörper wurden massive Scheiben mit einem Durchmesser von 42 mm und einer Dicke von 6 mm hergestellt. Diese wiesen keine sichtbaren Lufteinschlüsse auf. Es wurden jeweils zumindest die Härte (ShA), die Dichte und die Rückprallelastizität der Prüfkörper bestimmt.

Die Härte wurde nach DIN ISO 7619 - 1 : 2012 - 02 bestimmt, wobei die Werte bei -30 °C, -15 °C, 23 °C, 30 °C und 50 °C gemessen wurden. Aus diesen Werten wurde die Änderung der Härte von -15 °C auf 30 °C berechnet.

Die Dichte wurde gemäß DIN ISO 1183 - 1 : 2019 - 09 im Eintauchverfahren gemessen.

Die Messung der Rückprallelastizität erfolgte nach DIN 53512 : 2000 - 04, wobei zwei Prüfkörper geschichtet wurden um die notwendige Dicke zu erreichen. Die Rückprallelastizität wurde bei Temperaturen zwischen - 30 °C und 50 °C gemessen.

Zur Beurteilung der Dämpfungseigenschaften und der Schallreduktion wurden mehrere Kriterien herangezogen, die die Anforderungen an eine gute Schallreduktion und gute Stoßdämpfung abbilden:
Zunächst wurde eine Dichte von 1,40 bis 1,65 g/cm³ herangezogen um eine gute Körperschalldämmung zu erreichen ohne die mechanischen Eigenschaften durch eine Überfüllung der polymeren Komponente zu beeinträchtigen.

Als weiteres Kriterium wurde eine Rückprallelastizität bis maximal 30 % bei 23 °C herangezogen um gute Stoßdämpfungswerte zu erzielen.

Zusätzlich wurde die Änderung der Härte von -15 °C auf 30 °C herangezogen um gute Dämpfungseigenschaften und eine gute Schallreduktion im gesamten relevanten Temperaturbereich zu erzielen, wobei ein maximaler Wert von 6 ShA akzeptiert wurde.

Diese Kriterien ergaben sich aus mehreren Testserien. Dabei wurde ein vereinfachter Versuch durchgeführt, der an die Messung der Abklingrate angelehnt ist. Dazu wurde eine Metallhülse mit Innenkonus verwendet, die einen Außendurchmesser von 150 mm, eine Höhe von 120 mm und eine Wandstärke von 5 bis 15 mm aufwies. Diese wurde auf einem Prüfkörper positioniert und mit einem Hammer durch einen Schlag angeregt. Je schneller der Schall in dieser Anordnung abklang umso besser war die Schallreduktion.

In einem weiteren Versuch wurde eine Stahlkugel mit einem Durchmesser von 40 mm und einem Gewicht von etwa 260 g aus einer Höhe von 0,5 m auf einen Prüfkörper fallen gelassen. Je mehr Energie durch den Prüfkörper absorbiert wurde um so weniger prallte die Stahlkugel vom Prüfkörper ab. Nach dem Aufprall wurden die Sprunghöhe und die Anzahl der Sprünge gemessen. Je geringer die Sprunghöhe und die Anzahl der Sprünge der Stahlkugel nach dem Aufprall war, desto besser war die mechanische Dämpfung.

Beispiel 1: Brombutylkautschuk und Naturkautschuk als polymere Komponente Brombutylkautschuk wurde in unterschiedlichen Mischungsverhältnissen mit Naturkautschuk verschnitten und es wurden Prüfkörper hergestellt und geprüft, wie zuvor beschrieben.

Die Glasübergangstemperatur (T_{g}) von Naturkautschuk liegt bei - 70° C, während die Glasübergangstemperatur von Brombutylkautschuk bei - 66 °C liegt. Die beiden Kautschuke sind daher besonders gut für einen Verschnitt geeignet. Dabei wurden Mischungen mit einem Verhältnis von 100 Gew.% Brombutylkautschuk : Gew.0% Naturkautschuk in 10 % - Schritten bis zu einem Verhältnis von 0 Gew.% Brombutylkautschuk : 100 Gew.% Naturkautschuk hergestellt. Für Beispiel 1 wurde kein schwerer Füllstoff mit einer Dichte von zumindest 4 g/cm³ zugegeben.

Das Mischfell wurde trotz des zugegebenen inaktiven Rußes nicht ganz glatt, sodass die Verarbeitung der Mischungen aufwendig war.

Tabelle 1 zeigt, dass Mischungen mit einem Verhältnis von 60 : 40 bis 40 : 60 die Kriterien bezüglich der Rückprallelastizität und der Änderung der Härte erfüllen konnten. Es ergab sich ab einem Mischverhältnis von 60 phr Brombutylkautschuk zu 40 phr Naturkautschuk eine akzeptable, kleine Steigerung der Federrate bei Tieftemperatur. Bei einem Anteil an Naturkautschuk mit mehr als 60 phr war keine ausreichende Dämpfung bei Raumtemperatur mehr gegeben. Die besten Werte konnten mit einer Mischung mit 50 phr Brombutylkautschuk und 50 phr Naturkautschuk erreicht werden.

Allerdings wurde mit 1,22 g/cm³ keine ausreichende Dichte erzielt, um die gewünschte, verbesserte Schallreduktion zu erreichen.

Die Menge der Bestandteile der Kautschukzusammensetzung ist jeweils in phr angegeben.

**Tabelle 1: Versuchsreihe Brombutylkautschuk mit Naturkautschuk**

| Testmischung | 1 | 2 | 3 | 4 | 5 | 6 | 7 | 8 | 9 |
|---|---|---|---|---|---|---|---|---|---|
| NR (CV60) | 0 | 10 | 20 | 30 | 40 | 50 | 60 | 80 | 100 |
| BIIR (EXXON 2255) | 100 | 90 | 80 | 70 | 60 | 50 | 40 | 20 | 0 |
| Stearinsäure | 1 | 1 | 1 | 1 | 1 | 1 | 1 | 1 | 1 |
| Ruß (N990) | 80 | 80 | 80 | 80 | 80 | 80 | 80 | 80 | 80 |
| Thiazol-Beschleuniger (MBTS75%) | 1 | 1 | 1 | 1 | 1 | 1 | 1 | 1 | 1 |
| Thiuram-Beschleuniger (TBzTD70%) | 1 | 1 | 1 | 1 | 1 | 1 | 1 | 1 | 1 |
| Schwefel (S80) | 1,5 | 1,5 | 1,5 | 1,5 | 1,5 | 1,5 | 1,5 | 1,5 | 1,5 |
| Zinkoxid Rotsiegel (G01) | 5 | 5 | 5 | 5 | 5 | 5 | 5 | 5 | 5 |
| | 190 | 190 | 190 | 190 | 190 | 190 | 190 | 190 | 190 |
| | | | | | | | | | |
| Härte [ShA] | 50 | 53 | 53 | 54 | 55 | 56 | 56 | 56 | 57 |
| Dichte [g/cm³] | 1,22 | 1,22 | 1,22 | 1,22 | 1,22 | 1,22 | 1,22 | 1,22 | 1,22 |
| | | | | | | | | | |
| Rückprallelastizität -30°C [%] | 10 | 9 | 8 | 8 | 7 | 6 | 6 | 6 | 9 |
| Rückprallelastizität -15°C [%] | 3 | 4 | 4 | 4 | 5 | 6 | 6 | 9 | 20 |
| Rückprallelastizität 23°C [%] | 8 | 10 | 12 | 16 | 20 | 24 | 29 | 39 | 57 |
| Rückprallelastizität 30°C [%] | 10 | 12 | 14 | 18 | 22 | 25 | 30 | 41 | 57 |
| Rückprallelastizität 50°C [%] | 23 | 25 | 29 | 32 | 35 | 40 | 44 | 51 | 59 |
| | | | | | | | | | |
| Härte [ShA] -30°C | 71 | 68 | 66 | 63 | 63 | 63 | 63 | 62 | 62 |
| Härte [ShA]-15°C | 61 | 62 | 61 | 61 | 59 | 59 | 59 | 59 | 59 |
| Härte [ShA] 23°C | 50 | 53 | 53 | 54 | 55 | 56 | 56 | 56 | 57 |
| Härte [ShA] 30°C | 49 | 52 | 52 | 53 | 54 | 56 | 56 | 56 | 56 |
| Härte [ShA] 50°C | 45 | 49 | 51 | 51 | 53 | 54 | 54 | 54 | 55 |
| Änderung der Härte [ShA] zwischen -15 °C und 30°C | 12 | 10 | 9 | 8 | 5 | 3 | 3 | 3 | 3 |

### Beispiel 2: Kautschukzusammensetzungen mit verschiedenen Füllstoffen

Es wurden Kautschukzusammensetzungen mit verschiedenem Füllstoffgehalt getestet. Die polymere Komponente bestand jeweils aus 50 phr Naturkautschuk und 50 phr Brombutylkautschuk.

Als schwere Füllstoffe mit einer Dichte von zumindest 4 g/cm³ wurden Bariumsulfat und Eisenoxid eingesetzt. Das verwendete Eisenoxid hatte eine Dichte von 5,2 g/cm³, das verwendete Bariumsulfat eine Dichte von 4,4 g/cm³. Beide Füllstoffe sind schwer und weisen eine Teilchengröße d₅₀ von größer 1 000 nm auf, wobei Eisenoxid mit einer mittleren Teilchengröße d₅₀ von 10 000 nm verwendet wurde, und Bariumsulfat mit einer mittleren Teilchengröße d₅₀ von 3 000 nm. Diese Füllstoffe haben wenig Einfluss auf die Elastizität der vernetzten Kautschukzusammensetzung.

Als leichte Füllstoffe mit einer Dichte von weniger als 4 g/cm³ waren Kieselerde und Ruß enthalten, wobei ebenfalls inaktive Füllstoffe verwendet wurden, um den Einfluss auf die Elastizität der vernetzten Kautschukzusammensetzung zu minimieren. Die verwendete Neuburger Kieselerde wird von der Firma Hoffmann Mineral GmbH angeboten und ist ein Gemisch aus amorpher und kryptokristalliner Kieselsäure und lamellarem Kaolinit mit der CAS-Nr. 1020665-14-8. Als Haftvermittler kommen verschiedene organofunktionelle Silane und/oder Paraffine zum Einsatz. Ebenso könnte Bis -[3-(triethoxysilyl)]-tetrasulfan verwendet werden, das unter der Bezeichnung Si 69 von der Firma Evonik vertrieben wird. Das verwendete Aktisil PF216 hatte eine spezifische Oberfläche von 9 m²/g, der verwendete Ruß N550 hatte eine spezifische Oberfläche von 42 m²/g.

Die Mischungen und Prüfkörper wurden wie oben beschrieben hergestellt und getestet. Zusätzlich zu den oben genannten Materialeigenschaften wurden die Zugfestigkeit und die Bruchdehnung nach DIN 53504 : 2017 - 03 mit Normstab S2 gemessen, und der Weiterreißwiderstand nach DIN ISO 34 - 1 : 2016 - 09 mit der Streifenprobe geprüft. Die Ergebnisse sind in Tabelle 2 zusammengefasst.

Tabelle 2 zeigt, dass bei den Testmischungen 20 und 21, in denen keine schweren Füllstoffe enthalten waren, keine ausreichende Dichte erzielt werden konnte. Diese Testmischungen zeigten den höchsten Spannungswert bei 100% Dehnung und daher ein schlechteres Rückstellverhalten. Die Testmischung 10 lieferte zudem eine relativ niedrige Bruchdehnung.

Die Testmischungen 25, 26 und 28, die schwere Füllstoffe mit mehr als 100 phr enthielten, hatten eine erhöhte Dichte von über 1,65 g/cm³.

Die Testmischungen 22, 23, 24 und 27 konnten alle Kriterien erfüllen. Es war feststellbar, dass diese Mischungen den Schall schneller abklingen ließen. Gleichzeitig waren Sprunghöhe und Anzahl der Sprünge reduziert.

Die dynamischen und mechanischen Eigenschaften der Testmischung 24 wurden mittels einer dynamisch-mechanischen-Analyse (DMA) weiter untersucht. Dazu wurden Prüfkörper mit einer Größe von 40 mm * 7 mm * 2 mmaus einer mit der Testmischung 24 hergestellten Schienenzwischenlage geschnitten und der Speichermodul (G' in Pa) und der Verlustmodul (G" in Pa) bestimmt. Als Vergleich wurden eine "Probe 1 weich" aus reinem EPDM herangezogen, die bekannte weiche Schienenzwischenlagen repräsentiert. Weiters wurde eine "Probe 2 hart" aus reinem EVA untersucht, die eine bekannte harte Schienenzwischenlage repräsentiert. Die Prüfkörper wurden ebenso aus der jeweiligen Schienenzwischenlage geschnitten. Die Größe des Prüfkörpers von der harten Schienenzwischenlage betrug 40 mm * 6 mm * 2 mm und von der weichen Schienenzwischenlage 40 mm * 7 mm * 2 mm. Der Speichermodul repräsentiert den elastischen Anteil eines Materials und steht für den Anteil der Energie, die nach einer Deformation bei der Entlastung wieder freigegeben wird. Er ist auch ein Maß für die Steifigkeit eines Materials. Der Verlustmodul repräsentiert den viskosen Anteil eines Materials und steht für die Energie, die bei einer Deformation durch innere Reibung in Wärme umgewandelt wird. Aus diesen Werten wurde die Verlustkomplianz (1/Pa) errechnet, die für das steifigkeitsunabhängige Dämpfungsverhalten von Materialien unterschiedlicher Steifigkeit herangezogen wird. Umso höher die Verlustkomplianz ist, umso besser ist das Dämpfungsverhalten eines Materials.

Der Temperatursweep wurde zwischen - 80 °C und 50 °C bei einer Aufheizgeschwindigkeit von 1 K/min und einer Frequenz von 1 Hz mit einer Auslenkung von 0,5 °, Vorlast mit 0 N gemessen. Zuvor wurde der Probekörper auf -80 °C mit 5K/min abgekühlt. Der Frequenzsweep wurde zwischen 0,01 Hz und 10 Hz bei - 25 °C, 23 °C und 50 °C mit einer Auslenkung von 0,5 °, Vorlast mit 0,5 N (Zug) gemessen. Vor dem Prüfen wurde die Messkammer temperiert, der Prüfkörper eingespannt und innerhalb von 10 min auf Temperatur gebracht, wobei Temperaturabweichung zu Testbeginn < 0,05°C von der Solltemperatur akzeptiert wurden.

Die Prüfung erfolgte mit einem Rheometer von Anton Paar MCR501, Messsystem: SRF12-SN19150.

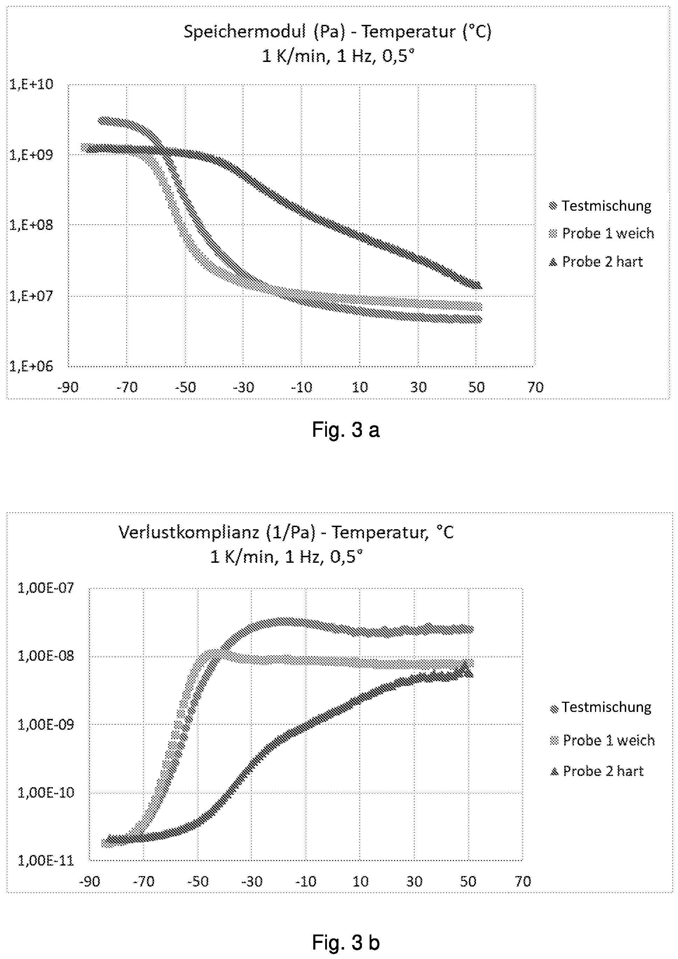

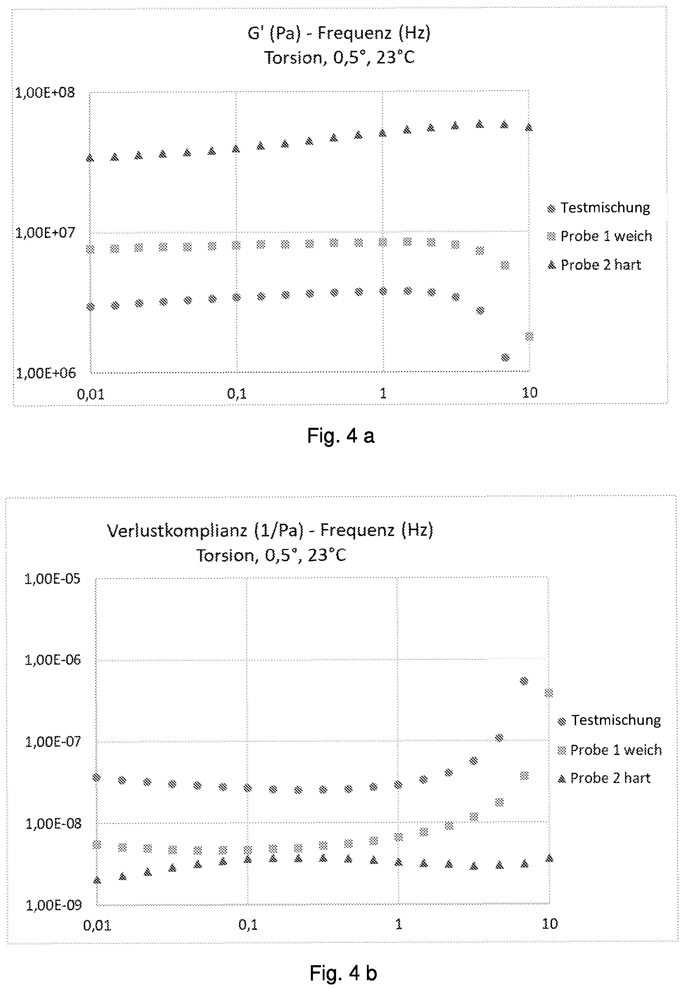

Fig. 3a, 3b, 4a und 4b zeigen Ergebnisse dieser Messungen.

Der Prüfkörper aus der Testmischung 24 wies einen niedrigen Speichermodul und eine hohen Verlustkomplianz auf, wobei sich eine geringe Temperaturabhängigkeit zeigte. Die Testmischung 24 zeigte besonders gute Dämpfungseigenschaften im gesamten relevanten Temperaturbereich.

Im Vergleich zu Probe 1 und Probe 2 konnte mit der Testmischung 24 die beste Dämpfung erzielt werden.

**Tabelle 2: Kautschukzusammensetzungen mit unterschiedlichen Füllstoffen**

| Testmischung | 20 | 21 | 22 | 23 | 24 | 25 | 26 | 27 | 28 |
|---|---|---|---|---|---|---|---|---|---|
| Naturkautschuk | 50 | 50 | 50 | 50 | 50 | 50 | 50 | 50 | 50 |
| Brombutylkautschuk | 50 | 50 | 50 | 50 | 50 | 50 | 50 | 50 | 50 |
| Eisenoxid (MagniF 10) | | | | | | | | 85 | 170 |
| Bariumsulfat | | | 50 | 80 | 100 | 120 | 150 | | |
| Ruß N550 | 80 | 20 | 20 | 20 | 20 | 20 | 20 | | |
| Neuburger Kieselerde, oberflächenbehandelt | | 100 | 30 | 30 | 30 | 30 | 30 | 30 | 30 |
| (Aktisil PF 216) | | | | | | | | | |
| Mineralölweichmacher | 5 | 5 | 5 | 6,5 | 7,5 | 8,5 | 10 | 2,5 | 2,5 |
| Stearinsäure | 1 | 1 | 1 | 1 | 1 | 1 | 1 | 1 | 1 |
| Thiazol-Beschleuniger (MBTS75%) | 1 | 1 | 1 | 1 | 1 | 1 | 1 | 1 | 1 |
| Thiuram-Beschleuniger (TBzTD70%) | 1 | 1 | 1 | 1 | 1 | 1 | 1 | 1 | 1 |
| Schwefel 80% | 1,5 | 1,5 | 1,5 | 1,5 | 1,5 | 1,5 | 1,5 | 1,5 | 1,5 |
| Zinkoxid Rotsiegel | 5 | 5 | 5 | 5 | 5 | 5 | 5 | 5 | 5 |
| | | | | | | | | | |
| Härte [SHA] | 56 | 59 | 57 | 58 | 60 | 61 | 64 | 58 | 63 |
| Dichte [g/cm³] | 1,22 | 1,33 | 1,4 | 1,5 | 1,6 | 1,7 | 1,76 | 1,58 | 1,9 |
| | | | | | | | | | |
| M100 [N/mm²] | 2,3 | 2,2 | 1,8 | 1,8 | 1,8 | 1,7 | 2,1 | 1,9 | 1,8 |
| M300 [N/mm²] | 7,6 | 7,3 | 6,4 | 6 | 5,7 | 5,1 | 5,5 | 5,9 | 5 |
| Zugfestigkeit [N/mm²] | 8,1 | 8,5 | 8,9 | 7,7 | 7,7 | 6,5 | 6,3 | 7,3 | 5,6 |
| Bruchdehnung [%] | 340 | 370 | 412 | 379 | 403 | 380 | 340 | 377 | 342 |
| Weiterreißwiderstand [N/mm] | 6,2 | 6,6 | 6,4 | 6,7 | 6,9 | 6,8 | 6,7 | 5,1 | 5,7 |
| | | | | | | | | | |
| Rückprallelastizität -40°C[%] | 6 | 5 | 6 | 6 | 6 | 6 | 7 | 6 | 6 |
| Rückprallelastizität -30°C[%] | 6 | 5 | 6 | 6 | 6 | 6 | 7 | 6 | 6 |
| Rückprallelastizität -25°C[%] | 5 | 5 | 5 | 5 | 5 | 5 | 6 | 5 | 5 |
| Rückprallelastizität -15°C[%] | 5,5 | 4,5 | 5 | 5 | 5 | 5 | 5 | 5 | 5 |
| Rückprallelastizität -10°C[%] | 6 | 5 | 6 | 6 | 6 | 5 | 5 | 6 | 5 |
| Rückprallelastizität 0°C[%] | 9 | 8 | 9 | 8 | 8 | 7 | 8 | 8 | 7 |
| Rückprallelastizität 5°C[%] | 14 | 12 | 12 | 12 | 11 | 12 | 12 | 12 | 12 |
| Rückprallelastizität 23°C[%] | 23 | 20 | 21 | 21 | 21 | 19 | 19 | 22 | 22 |
| Rückprallelastizität 30°C[%] | 25 | 27 | 28 | 27 | 26 | 25 | 25 | 26 | 25 |
| Rückprallelastizität 50°C[%] | 42 | 43 | 44 | 44 | 44 | 43 | 41 | 44 | 43 |
| | | | | | | | | | |
| Härte [ShA] -15°C | 59 | 57 | 60 | 61 | 62 | 64 | 67 | 60 | 66 |
| Härte [ShA] 23°C | 56 | 55 | 57 | 58 | 60 | 61 | 64 | 58 | 63 |
| Härte [ShA] 30°C | 56 | 53 | 56 | 58 | 59 | 60 | 63 | 57 | 62 |
| Härte [ShA] 50°C | 54 | 50 | 55 | 56 | 58 | 59 | 62 | 56 | 61 |
| Änderung zwischen -15 und 30°C | 3 | 4 | 4 | 3 | 3 | 4 | 4 | 3 | 4 |

### Beispiel 3: Brombutylkautschuk und EPDM als polymere Komponente

In einer weiteren Versuchsreihe wurde ein Verschnitt von Brombutylkautschuk mit EPDM getestet. Mit Keltan 6750 wurde ein EPDM mit einem Polypropylengehalt von 51 % verwendet. Als Füllstoff mit einer Dichte von zumindest 4 g/cm³ wurde das auch in Beispiel 2 verwendete Bariumsulfat zugegeben. Als Füllstoffe mit einer Dichte von weniger als 4 g/cm³ wurden Ruß N550 und Aktisil PF216 verwendet.

Die Zugfestigkeit und die Bruchdehnung wurden wie in Beispiel 2 nach DIN 53504 : 2017 - 03 mit Normstab S2 gemessen, der Weiterreißwiderstand wurde nach DIN ISO 34 - 1 : 2016 mit der Streifenprobe geprüft. Die Ergebnisse sind in Tabelle 3 zusammengefasst.

Auch für diese Testmischungen wurden als Kriterien eine Dichte von 1,40 g/cm³ bis 1,65 g/cm³, eine Rückprallelastizität bei 23 °C von maximal 30 %, und ein Anstieg der Härte zwischen -15 °C und 30 °C von maximal 6 ShA herangezogen.

Die besten Werte ergaben sich für eine Kautschukmischung mit einer polymeren Komponente, die aus 50 phr Brombutylkautschuk und 50 phr EPDM bestand. Die Tieftemperatureigenschaften dieses Verschnitts waren im Bereich bis -25 °C kaum merklich schlechter als die Eigenschaften des Verschnitts von Brombutylkautschuk mit Naturkautschuk. Vorteilhaft bei der Verwendung von EPDM ist, dass auch ohne Alterungs- und Ozonschutzmittel eine lange Haltbarkeit erzielt werden kann, sodass die Rezeptur und Herstellung vereinfacht werden kann.

**Tabelle 3: Versuchsreihe Brombutylkautschuk mit EPDM**

| Testmischung | 30 | 31 | 32 | 33 | 34 | 35 | 36 |
|---|---|---|---|---|---|---|---|
| BIIR | 100 | 60 | 50 | 40 | 30 | 20 | 0 |
| EPDM (Keltan 6750) | 0 | 40 | 50 | 60 | 70 | 80 | 100 |
| Bariumsulfat | 100 | 100 | 100 | 100 | 100 | 100 | 100 |
| Ruß (N550) | 20 | 20 | 20 | 20 | 20 | 20 | 20 |
| Neuburger Kieselerde, oberflächenbehandelt (Aktisil PF216) | 30 | 30 | 30 | 30 | 30 | 30 | 30 |
| Mineralölweichmacher | 2,5 | 2,5 | 2,5 | 2,5 | 2,5 | 2,5 | 2,5 |
| Stearinsäure | 1 | 1 | 1 | 1 | 1 | 1 | 1 |
| Thiazol-Beschleuniger (MBTS75%) | 1,7 | 1,4 | 1,3 | 1,2 | 1,1 | 1 | 0,8 |
| Sulfenamid-Beschleuniger) (CBS80%) | | 0,3 | 0,4 | 0,4 | 0,5 | 0,6 | 0,7 |
| Thiuram-Beschleuniger (TBzTD70%) | | 0,6 | 0,8 | 0,9 | 1,1 | 1,2 | 1,5 |
| Schwefel (S80%) | 0,6 | 1,2 | 1,3 | 1,5 | 1,6 | 1,7 | 2 |
| Zinkoxid Rotsiegel | 5 | | | | | | 5 |
| Magnesiumoxid (Elastomag170) | 0,2 | 0,1 | 0,1 | | | | |
| | | | | | | | |
| Härte [ShA] | 51 | 60 | 61 | 61 | 62 | 64 | 72 |
| Dichte [g/cm³] | 1,62 | 1,6 | 1,59 | 1,58 | 1,57 | 1,57 | 1,55 |
| Rückprallelastizität bei 23° C [%] | 10 | 22 | 25 | 28 | 33 | 37 | 55 |
| | | | | | | | |
| Zugfestigkeit [N/mm²] | 8 | 9,5 | 9,8 | 10,2 | 10,6 | 11 | 12,2 |
| Bruchdehnung | 564 | 481 | 468 | 444 | 429 | 401 | 387 |
| M100 [N/mm²] | 1,3 | 1,6 | 1,7 | 1,8 | 2,2 | 2,4 | 2,7 |
| M300 [N/mm²] | 3,8 | 5 | 5,6 | 6,4 | 7,5 | 8,1 | 9,1 |
| M500 [N/mm²] | 7,1 | | | | | | |
| Weiterreißwiderstand [N/mm] | 9,1 | 6,1 | 4,9 | 4,9 | 4,5 | 4,3 | 3,5 |
| Härte [ShA] -30°C | 71 | 70 | 69 | 69 | 69 | 71 | 78 |
| Härte [ShA] -15°C | 61 | 65 | 64 | 64 | 65 | 67 | 74 |
| Härte [ShA] 23°C | 51 | 60 | 61 | 61 | 62 | 64 | 72 |
| Härte [ShA] 30°C | 50 | 59 | 61 | 61 | 62 | 64 | 71 |
| Härte [ShA] 50°C | 46 | 57 | 58 | 59 | 61 | 63 | 70 |
| Änderung der Härte [ShA] zwischen -15 °C und 30°C | 11 | 6 | 3 | 3 | 3 | 3 | 3 |

### Beispiel 4: Zwischenlagen mit unterschiedlicher Form

Fig. 1 a zeigt eine beispielhafte Schienenzwischenlagein Draufsicht
Fig. 1b zeigt einen Schnitt entlang der Achse A -A durch die Zwischenlage aus Fig. 1 a
Fig. 2 a zeigt eine weitere beispielhafte Schienenzwischenlagein Draufsicht

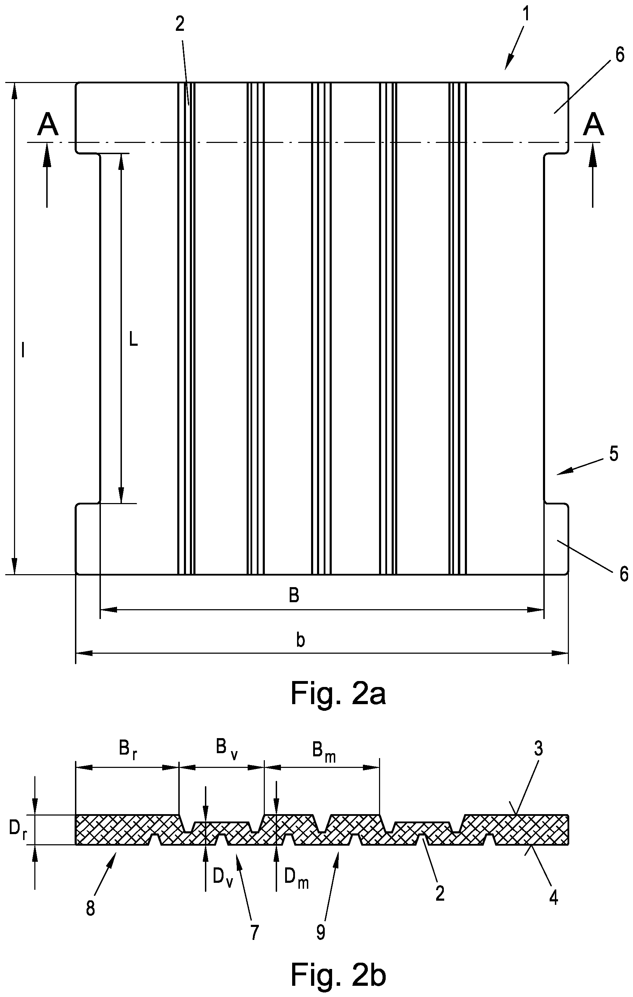

Fig. 2 b zeigt einen Schnitt entlang der Achse A-A durch die Zwischenlage aus Fig. 2a

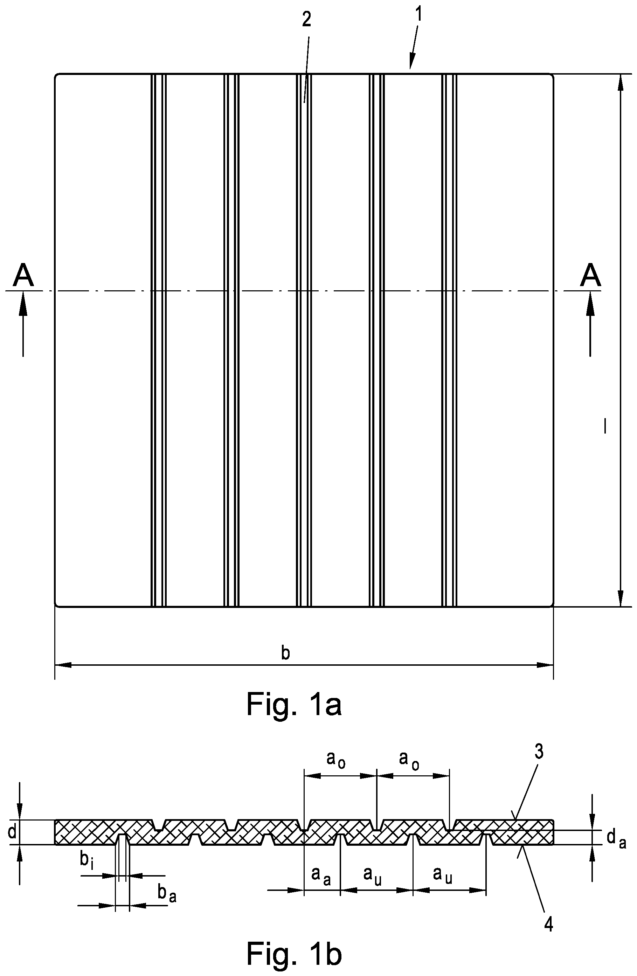

Fig. 1 a zeigt eine beispielhafte Schienenzwischenlage1 aus einer zuvor beschriebenen beispielhaften vernetzten Kautschukmischung mit der Grundform für eine UIC60-Schiene mit 150 mm Schienenfußbreite. Die Schienenzwischenlage1 ist plattenförmig ausgebildet und weist eine Dicke d von 7 mm auf. Die Länge I, die parallel zu Schiene verläuft, misst 160 m, die Breite b, quer zum Schienenverlauf misst 150 mm. Die Ecken weisen einen Radius von 1,5 mm auf.

Statt der dargestellten Schienenzwischenlage1 könnten auch Dämpfungselemente für andere Anwendungen aus der zuvor beschriebenen vernetzten Kautschukmischung hergestellt werden.

In der dargestellten Ausführungsform weist die Schienenzwischenlage1 Ausnehmungen 2 auf, die abwechselnd an der Oberseite 3 und der Unterseite 4 der Schienenzwischenlage 1 angeordnet sind. Dies ermöglicht bei Belastung der Schienenzwischenlage 1 eine Ausdehnung auch im Bereich der Befestigung. Die Ausnehmungen 2 verlaufen in der dargestellten Ausführungsform rillenförmig über die gesamte Länge I der Schienenzwischenlage 1. Die Kanten der Ausnehmungen weisen jeweils einen Radius von 1 m auf.

Fig. 1 b zeigt, dass in der dargestellten Ausführungsform die Ausnehmungen 2 3 mm tief sind, sodass die Schienenzwischenlage 1 im Bereich der Ausnehmungen 2 eine Dicke dₐ von 4 mm aufweist. Die Form der Ausnehmungen 2 ist im Querschnitt gleichschenkelig trapezförmig, wobei sie an der Oberseite 3 und an der Unterseite 4 der Schienenzwischenlage 1 jeweils eine Breite bₐ von 4 mm aufweisen und zum Inneren der Schienenzwischenlage 1 zusammenlaufend angeordnet sind und an ihrer Innenseite eine Breite bᵢ von 2 mm aufweisen. Der Abstand aₒ bzw. aᵤ zwischen zwei Ausnehmungen 2, die auf der gleichen Seite angeordnet sind, beträgt 22 mm, sodass der Mittelpunkt einer Ausnehmung 2 auf der Oberseite 3 22 mm vom Mittelpunkt der auf der Oberseite 3 benachbarten Ausnehmung 2 beabstandet ist. Zwischen einem Schnitt durch den Mittelpunkt einer Ausnehmung 2 auf der Oberseite 3 und dem Mittelpunkt einer Ausnehmung 2 auf der Unterseite 4 ist in der dargestellten Ausführungsform ein Abstand aₐ von 11 mm vorgesehen.

Die in Fig. 1 a und Fig. 1 b gezeigte Schienenzwischenlage 1 aus der Testmischung 24 erreichte bei der Federsteifigkeitsmessung in Anlehnung an EN 13146 - 9 : 2011 - 12 einen Wert von etwa 200 kN/mm.

Fig. 2 a zeigt eine alternative Schienenzwischenlage 1. Die Schienenzwischenlage 1 weist ebenfalls eine Länge I von 160 mm auf. Dabei weist die Mittelzone 5 der Längserstreckung, die der Befestigung dient, eine geringere Breite B auf, als die Randzonen 6 der Längserstreckung. In der dargestellten Ausführungsform ist die Mittelzone 5 mit einer Länge L von 114 mm ausgebildet, die Randzonen 6 sind jeweils 23 mm lang. Die Mittelzone 5 hat in der dargestellten Ausführungsform eine Breite B von 146 mm, die Randzonen 6 haben eine Breite Bᵣ von 160 mm. Mit diesen Maßen ist die Schienenzwischenlage 1 auch nachträglich in eine bestehende Gleisstrecke einbaubar.

Die in Fig. 2 a dargestellte Schienenzwischenlage 1 weist ebenfalls Ausnehmungen 2 auf, die über die gesamte Längserstreckung der Schienenzwischenlage 1 ausgebildet sind.

Fig. 2 b zeigt, dass Verlauf, Form und Abstand der Ausnehmungen 2 die bereits zu Fig. 1b beschriebenen Eigenschaften aufweisen. Durch die Ausnehmungen 2 werden somit Stege ausgebildet und entlang der Breite B der Schienenzwischenlage 1 verschiedene Bereiche voneinander abgegrenzt.

In der dargestellten Ausführungsform weist die Schienenzwischenlage 1 Randbereiche 8 mit erhöhter Dicke Dᵣ auf und auch der Mittelbereich 9 weist eine größere Dicke Dₘ auf, als die zwischen den Randbereichen 8 und dem Mittelbereich 9 angeordneten Verbindungsbereiche 7, die eine Dicke Dᵥ aufweisen. Die Randbereiche 8 weisen in der dargestellten Ausführungsform jeweils eine Breite Bᵣ von 30 mm auf, die Verbindungsbereiche 7 jeweils eine Breite Bᵥ von 30 mm und der Mittelbereich 9 eine Breite Bₘ von 40 mm.

In der dargestellten Ausführungsform beträgt die Dicke Dᵣ der Randbereiche 8 und die Dicke Dₘ des Mittelbereichs 9 je 9 mm. Die Dicke Dᵥ des Verbindungsbereichs beträgt in der dargestellten Ausführungsform 7 mm. Die Dicke Dᵣ, Dᵥ, Dₘ wird jeweils von der Oberseite 3 zur Unterseite 4 in einem Bereich ohne Ausnehmung 2 angegeben. Im Bereich der Ausnehmungen 2 ist die Dicke Dᵣ, Dᵥ, Dₘ somit jeweils reduziert.

Durch die Bereiche 7, 8, 9, die eine unterschiedliche Dicke Dᵥ, Dᵣ, Dₘ aufweisen, kann die Federsteifigkeit besonders einfach an die benötigten Werte angepasst werden, die sich je nach Einsatzgebiet unterscheiden können, wobei als Beispiel light rail- und heavy rail-Anwendungen genannt werden können.

Die Erhöhung der Dicke kann auch nur abschnittsweise, beispielsweise nur in den Randzonen 6 erfolgen, und nicht über die gesamte Längserstreckung der Schienenzwischenlage 1. Auch die Form der Ausnehmungen kann den entsprechenden Vorgaben entsprechend angepasst werden.

Die Federraten von Schienenzwischenlagen 1 mit unterschiedlicher Form wurden untersucht. Dazu wurde anhand der in Fig. 2a dargestellten Schienenzwischenlage 1 die Dicken Dᵣ und Dₘ verändert. Die Schienenzwischenlagen 1 wurden aus der Testmischung 24 hergestellt, die bei 23 °C eine Härte von 60 ShA aufweist. Die Federrate wurde in Anlehnung an EN 13 146 - 9 : 2011 - 12 mit einer Universalprüfmaschine bestimmt. Dazu wurden Kraftverteilerplatten mit einer Länge von 210 mm und einer Breite von 125 mm oder 150 mm je nach Art der getesteten Schienenzwischenlage verwendet, da die Lastverteilerplatten genau so breit sein müssen, wie die Schienenzwischenlage. Weiters wurde Schleifleinen P400 oben und unten verwendet, wobei zwei Setzzyklen zwischen 18 und 85 kN durchgeführt wurden und die Messung beim dritten Zyklus zwischen 18 und 68 kN erfolgte. Es wurde daher jeweils zunächst von 0 bis 85 kN belastet, dann auf 18 kN entlastet, nochmals auf 85 kN belastet und wieder auf 18 kN entlastet. Anschließend wurde nochmals auf 85 kN belastet, wobei der Federweg zwischen 18 und 68 kN gemessen wurde, um die Federrate zu ermitteln. Der Vorschub erfolgte kraftgeregelt mit 120 +/-10 kN/min. Während die Norm vier von einander unabhängige Wegmesssensoren empfiehlt, erfolgt die Wegmessung bei der verwendeten Universalprüfmaschine über den Traversenweg, wobei die Traverse der bewegliche Teil der Maschine ist, der über die Probenaufnahmen Druck auf die Proben ausübt.

Die Ergebnisse für die unterschiedlichen Formen sind in Tabelle 4 zusammengefasst.

**Tabelle 4: Federraten von Schienenzwischenlagen mit unterschiedlicher Form**

| Versuch | Form der Schienenzwischenlage | Federrate [kN/mm] |
|---|---|---|
| Kontur 1 | Einheitlichen Dicke D von 7 mm | 198 |
| Kontur 2 | Randbereiche mit einer Dicke Dᵣ von 7,5 mm | 175 |
| Kontur 3 | Randbereiche mit einer Dicke Dᵣ von 8,0 mm | 149 |
| Kontur 4 | Randbereiche mit einer Dicke Dᵣ von 8,5 mm | 144 |
| Kontur 5 | Randbereiche mit einer Dicke Dᵣ von 9,0 mm | 131 |
| Kontur 6 | Randbereiche mit einer Dicke Dᵣ von 9,0 mm, Mittelbereich mit einer Dicke Dₘ von 8,0 mm | 123 |
| Kontur 7 | Randbereiche mit einer Dicke Dᵣ von 9,0 mm, Mittelbereich mit einer Dicke Dₘ von 9,0 mm | 121 |
| Kontur 8 | Randbereiche mit einer Dicke Dᵣ von 9,5 mm, Mittelbereich mit einer Dicke Dₘ von 9,0 mm | 102 |

Zusätzlich wurden die oben beschriebenen Tests zur Prüfung der Schallreduktion und der mechanischen Dämpfung durchgeführt. Die gezeigte Schienenzwischenlage zeigte eine gute Schallabsorption und eine rasche Energieabsorption beim Aufprall der Stahlkugel.

Mit Schienenzwischenlagen 1 mit Kontur 1 aus der Testmischung 24 wurde eine weitere Testung durchgeführt. Dazu wurde die Luftschallemission bzw. die Vorbeifahrgeräusche auf einer Teststrecke untersucht, in der die Schienenzwischenlagen 1 verbaut waren. Die Messung der Luftschallemission erfolgte nach EN ISO 3095:2013.

Die Testung erfolgte auf einer geraden Strecke an drei hintereinander liegenden Gleisabschnitten von etwa 200 m Länge, die abgesehen von den untersuchten Schienenzwischenlagen einen gleichartigen Oberbau aufwiesen. An einem Gleisabschnitt 3 wurde die Testzwischenlage verbaut. Gleichzeitig wurde an einem Gleisabschnitt 1 eine harte Schienenzwischenlage als Vergleichszwischenlage 1 getestet und an einem Gleisabschnitt 2 wurde eine weiche Schienenzwischenlage als Vergleichszwischenlage 2 getestet.

Die Vergleichszwischenlage 1 hatte eine Federsteifigkeit 700 kN/mm. Die Vergleichszwischenlage 2 hatte eine Federsteifigkeit von 100 kN/mm.

Die ersten Messungen fanden Anfang Dezember statt. Zu diesem Zeitpunkt waren im Gleisabschnitt 3 ebenfalls Vergleichszwischenlagen 2 verbaut. Anschließend wurde der Gleisabschnitt 3 umgerüstet auf Testzwischenlagen. Eine zweite Messung erfolgte Anfang März bei vergleichbaren Umgebungsbedingungen wie im Dezember. Da die Abweichungen der Vorbeifahrpegel zwischen der ersten Messung im Dezember und der zweiten Messung im März im Mittel weniger als 0.5 dB betragen, kann insgesamt von vergleichbaren Umgebungsbedingungen bezüglich der Fahrzeuge, Strecke und Witterung ausgegangen werden.

Eine dritte Messung fand Ende Juni bei sommerlich hohen Temperaturen statt.

Die Messungen der Vorbeifahrpegel der dort verkehrenden Züge erfolgten über einen Zeitraum von mehreren Stunden, darunter befanden sich häufig ein dreiteiliger Niederflur-Nahverkehrszug vom Typ RABe 525 "NINA 3T". Weiters wurde ein Personenzug vom Typ "EWIII" mit Re465 Lok und 6 Einheitswagen III erfasst. Aus den Messungen wurden mindestens vier Vorbeifahrten mit gleicher Geschwindigkeit zur Mittelung herangezogen. Von den vorbeifahrenden Güterzügen wurden zwei Güterzüge mit ähnlich hoher Geschwindigkeit und einer Länge von über 200m für die Ergebnisbildung ausgewählt. Die erhaltenen Messergebnisse wurden im Anschluss gemittelt.

Am Gleisabschnitt 3 konnte eine deutliche Lärmreduktion durch die Testzwischenlage im Vergleich zur Vergleichszwischenlage 2 festgestellt werden, wobei der Unterschied bei Personenzügen 2,9 bis 3,0 dB betrug, bei Nahverkehrszügen 2,0 bis 3,0 dB und bei Güterzügen 4,1 dB.

Auch gegenüber dem Gleisabschnitt 1 war eine Lärmreduktion durch die Testzwischenlage im Vergleich zur Vergleichszwischenlage 1 messbar, wobei sich bei Personenzügen ein Unterschied von 1,8 dB ergab, bei Nahverkehrszügen ein Unterschied von 2,2 dB und bei Güterzügen ein Unterschied von 1,6 dB.

Die Ergebnisse sind in Tabelle 5 zusammengefasst:

**Tabelle 5: Luftschallemission verschiedener Schienenzwischenlagen**

| | | | Abschnitt 3 | Abschnitt 2 | Abschnitt 1 |
|---|---|---|---|---|---|
| Referenzmessung | | | Vergleichszwischenlage 2 (weich) | | Vergleichszwischenlage 1 (hart) |
| | | | 7.5m | 7.5m | 7.5m |
| Zeitraum | Fahrzeuge | Anzahl - Mittelung | LpAeq,Tp | LpAeq,Tp | LpAeq,Tp |
| | | | dB(A) | dB(A) | dB(A) |
| 12_2019 | Personenzug | 6 | 82.2 | 82.0 | 80.9 |
| 12_2019 | Nahverkehrszug | 4 | 79.3 | 79.5 | 79.2 |
| | | | | | |

| Testmessung | | | TestZwischenlage | Vergleichszwischenlage 2 (weich) | Vergleichszwischenlage 1 (hart) |
|---|---|---|---|---|---|
| 03_2020 | Personenzug | 6 | 79.4 | 82.4 | 81.1 |
| 03_2020 | Nahverkehrszug | 4 | 77.3 | 80.3 | 79.5 |
| 06_2020 | Güterzug | 2 | 87.9 | 92.0 | 89.5 |
| diff | Personenzug | | 2.9 | -0.4 | -0.2 |
| diff | Nahverkehrszug | | 2.0 | -0.8 | -0.3 |

| Ergebnisse | | | | | |
|---|---|---|---|---|---|
| Unterschied zur Testzwischenlage | Personenzug | | 0.0 | + 3.0 | + 1.8 |
| Unterschied zur Testzwischenlage | Nahverkehrszug | | 0.0 | + 3.0 | + 2.2 |
| Unterschied zur Testzwischenlage | Güterzug | | 0,0 | + 4.1 | + 1.6 |

Durch die gezeigte Schienenzwischenlage 1 kann somit eine gute Schallreduktion erreicht werden und gleichzeitig können die mechanischen Erschütterungen abgefedert werden, sodass Schwelle und Schotter bzw. der Gleisoberbau geschont werden.

## Patentansprüche

1. Schwefelvernetzbare Kautschukzusammensetzung für eine Schienenzwischenlage, wobei die polymere Komponente einen halogenierten Butylkautschuk und zumindest einen weiteren Kautschuk ausgewählt aus den Elastomeren der Gruppen R oder M, die zumindest eine Doppelbindung enthalten, umfasst, wobei der halogenierte Butylkautschuk mit 40 bis 60 phr, insbesondere mit 50 phr, enthalten ist, wobei zumindest ein Schwefelvernetzer enthalten ist, und wobei zumindest ein schwerer Füllstoff mit einer Dichte von zumindest 4 g/cm³ enthalten ist, wobei die Gesamtmenge an schwerem Füllstoff mit einer Dichte von zumindest 4 g/cm³ 50 bis 100 phr beträgt, und wobei zumindest ein leichter Füllstoff mit einer Dichte von weniger als 4 g/cm³ enthalten ist, wobei die leichten Füllstoffe eine spezifische Oberfläche (BET) von maximal 50 m²/g aufweisen.

2. Schwefelvernetzbare Kautschukzusammensetzung nach Anspruch 1, wobei der halogenierte Butylkautschuk Brombutylkautschuk ist.

3. Schwefelvernetzbare Kautschukzusammensetzung nach Anspruch 1 oder 2, wobei der weitere Kautschuk ausgewählt ist aus einer Gruppe umfassend Naturkautschuk, synthetisches Polyisopren oder Styrolbutadienkautschuk, insbesondere mit einem Styrolgehalt von maximal 23,5 %, vorzugsweise mit einem Styrolgehalt von 15 %.

4. Schwefelvernetzbare Kautschukzusammensetzung nach Anspruch 1 oder 2, wobei der weitere Kautschuk EPDM ist, insbesondere EPDM mit einem Polyethylengehalt von 45 bis 55 %.

5. Schwefelvernetzbare Kautschukzusammensetzung nach einem der Ansprüche 1 bis 4, wobei die polymere Komponente ausschließlich aus dem halogenierten Butylkautschuk und dem weiteren Kautschuk besteht.

6. Schwefelvernetzbare Kautschukzusammensetzung nach Anspruch 5, wobei die polymere Komponente ausschließlich aus halogeniertem Butylkautschuk und Naturkautschuk besteht, oder
wobei die polymere Komponente ausschließlich aus halogeniertem Butylkautschuk und synthetischem Polyisopren besteht, oder
wobei die polymere Komponente ausschließlich aus halogeniertem Butylkautschuk und Styrolbutadienkautschuk mit einem Styrolgehalt von maximal 23,5 %, insbesondere mit einem Styrolgehalt von 15 %, besteht, oder
wobei die polymere Komponente ausschließlich aus halogeniertem Butylkautschuk und EPDM mit einem Polyethylengehalt von 45 bis 55 % besteht.

7. Schwefelvernetzbare Kautschukzusammensetzung nach einem der Ansprüche 1 bis 6, wobei inaktive Füllstoffe enthalten sind, wobei insbesondere vorgesehen ist, dass ausschließlich inaktive Füllstoffe enthalten sind.

8. Schwefelvernetzbare Kautschukzusammensetzung nach einem der Ansprüche 1 bis 7, wobei der schwere Füllstoff mit einer Dichte von zumindest 4 g/cm³ eine spezifische Oberfläche (BET) von maximal 50 m²/g aufweist, wobei insbesondere vorgesehen ist, dass alle Füllstoffe eine spezifische Oberfläche (BET) von maximal 50 m²/g aufweisen.

9. Schwefelvernetzbare Kautschukzusammensetzung nach einem der Ansprüche 1 bis 8, wobei als schwerer Füllstoff mit einer Dichte von zumindest 4 g/cm³ Bariumsulfat und/oder Eisenoxid und/oder Lithopone enthalten ist.

10. Schwefelvernetzbare Kautschukzusammensetzung nach einem der Ansprüche 1 bis 9, wobeileichte Füllstoffe mit einer Dichte von weniger als 4 g/cm³ mit einem Gesamtgehalt von 20 bis 60 phr enthalten sind.

11. Schwefelvernetzbare Kautschukzusammensetzung nach Anspruch 10, wobei als leichter Füllstoff mit einer Dichte von weniger als 4 g/cm³ ein Carbon black, insbesondere eine Carbon black N550 und/oder N990, enthalten ist.

12. Schwefelvernetzbare Kautschukzusammensetzung nach einem der Ansprüche 10 oder 11, wobei als leichter Füllstoff mit einer Dichte von weniger als 4 g/cm³ ein Kieselsäure-Derivat, insbesondere eine oberflächenbehandelte Kieselsäure, enthalten ist, wobei vorzugsweise vorgesehen ist, dass das Kieselsäure-Derivat eine spezifische Oberfläche von max. 50 m²/g aufweist.

13. Schwefelvernetzbare Kautschukzusammensetzung nach einem der Ansprüche 1 bis 12, wobei Weichmacher, insbesondere Mineralölweichmacher, mit 0 bis 10 phr, insbesondere 2,5 bis 7,5 phr, enthalten ist.

14. Schwefelvernetzte Kautschukmischung nach einem der Ansprüche 1 bis 13.

15. Dämpfungselement, insbesondere Schienenzwischenlage, aus einer vernetzten Kautschukmischung nach Anspruch 14, wobei vorzugsweise vorgesehen ist, dass das Dämpfungselement eine Dichte von 1,40 bis 1,65 g/cm³ und einer Härte von 50 bis 65 ShA (bei 23°C) aufweist.

16. Schienenzwischenlage nach Anspruch 15, wobei die Schienenzwischenlage zumindest zwei Bereiche mit unterschiedlicher Dicke aufweist, wobei insbesondere vorgesehen ist, dass die Schienenzwischenlage an ihrer Oberseite und/oder an ihrer Unterseite parallel zur Schienenauflage verlaufende rillenförmige Ausnehmungen aufweist, wobei die Dicke der Schienenzwischenlage im Bereich der Ausnehmung reduziert ist.

17. Schienenzwischenlage nach einem der Ansprüche 15 oder 16, wobei die Schienenzwischenlage parallel zur Schieneauflage verlaufende Stege mit einer im Vergleich zur restlichen Schienenzwischenlage erhöhten Dicke aufweist, wobei insbesondere vorgesehen ist, dass seitliche Randbereiche und/oder ein Mittelbereich mit erhöhter Dicke vorgesehen ist.

18. Verfahren zur Herstellung einer vernetzten Kautschukzusammensetzung nach Anspruch 15 bzw. eines Dämpfungselements, insbesondere einer Schienenzwischenlage, nach einem der Ansprüche 15 bis 17, wobei die Vulkanisation bei 150 °C bis 180 °C, insbesondere bei 170 °C, erfolgt,
wobei vorzugsweise vorgesehen ist, dass die Herstellung im Kompressionsverfahren erfolgt und die Verweilzeit in der Vulkanisationsform 4 bis 20 min, insbesondere 5 min, beträgt,
oder wobei vorzugsweise vorgesehen ist, dass die Herstellung im Spritzgussverfahren erfolgt und die Verweilzeit in der Vulkanisationsform 2 bis 8 min beträgt.

## Claims

1. Sulfur-cross-linkable rubber composition for a rail pad, wherein the polymeric component comprises a halogenated butyl rubber and at least one further rubber selected from the elastomers of the R or M groups, which contain at least one double bond, wherein the halogenated butyl rubber with 40 to 60 phr, in particular with 50 phr is contained, wherein at least one sulfur cross-linking agent iscontained, and wherein at least one heavy filler with a density of at least 4 g/cm³ is contained, wherein the total amount of heavy filler with a density of at least 4 g/cm³ is 50 to 100 phr, and wherein at least one light filler with a density of less than 4 g/cm³is contained, wherein the light fillers have a specific surface area (BET) of at most 50 m²/g.

2. Sulfur-cross-linkable rubber composition according to claim 1, wherein the halogenated butyl rubber is bromobutyl rubber.

3. Sulfur-cross-linkable rubber composition according to claim 1 or 2, wherein the further rubber is selected from a group comprising natural rubber, synthetic polyisoprene or styrene-butadiene rubber, in particular with a styrene content of at most 23.5%, preferably with a styrene content of 15%.

4. Sulfur-cross-linkable rubber composition according to claim 1 or 2, wherein the further rubber is EPDM, in particular EPDM with a polyethylene content of 45 to 55%.

5. Sulfur-cross-linkable rubber composition according to any one of claims 1 to 4, wherein the polymeric component consists exclusively of the halogenated butyl rubber and the further rubber.

6. Sulfur-cross-linkable rubber composition according to claim 5, wherein the polymeric component consists exclusively of halogenated butyl rubber and natural rubber, or
wherein the polymeric component consists exclusively of halogenated butyl rubber and synthetic polyisoprene, or
wherein the polymeric component consists exclusively of halogenated butyl rubber and styrene-butadiene rubber with a styrene content of at most 23.5%, in particular a styrene content of 15%, or
wherein the polymeric component consists exclusively of halogenated butyl rubber and EPDM with a polyethylene content of 45 to 55%.

7. Sulfur-cross-linkable rubber composition according to any one of claims 1 to 6, wherein inactive fillers are contained, wherein in particular it is provided that only inactive fillers are contained.

8. Sulfur-cross-linkable rubber composition according to any one of claims 1 to 7, wherein the heavy filler with a density of at least 4 g/cm³ has a specific surface area (BET) of at most 50 m²/g, wherein it is provided in particular that all fillers have a specific surface area (BET) of at most 50 m²/g.

9. Sulfur-cross-linkable rubber composition according to any one of claims 1 to 8, wherein barium sulfate and/or iron oxide and/or lithopone is contained as a heavy filler with a density of at least 4 g/cm³.

10. Sulfur-cross-linkable rubber composition according to any one of claims 1 to 9, wherein light fillers with a density of less than 4 g/cm³ are contained in a total amount of 20 to 60 phr.

11. Sulfur-cross-linkable rubber composition according to claim 10, wherein a carbon black, in particular carbon black N550 and/or N990, is contained as a light filler with a density of less than 4 g/cm³.

12. Sulfur-cross-linkable rubber composition according to any one of claims 10 or 11, wherein a silica derivative, in particular a surface-treated silica, is contained as a light filler, with a density of less than 4 g/cm³, wherein it is preferably provided that the silica-derivative has a specific surface area of at most 50 m²/g.

13. Sulfur-cross-linkable rubber composition according to any one of claims 1 to 12, wherein plasticizer, in particular mineral oil plasticizer is contained in an amount of 0 to 10 phr, in particular 2.5 to 7.5 phr.

14. Sulfur-cross-linked rubber mixture according to any one of claims 1 to 13.

15. Damping element, in particular rail pad, made from a cross-linked rubber mixture according to claim 14, wherein it is preferably provided that the damping element has a density of 1.40 to 1.65 g/cm³ and a hardness of 50 to 65 ShA (at 23°C).

16. Rail pad according to claim 15, wherein the rail pad has at least two areas of different thicknesses, wherein it is provided in particular that the rail pad has on its top side and/or on its underside groove-like recesses extending parallel to the rail support, wherein the thickness of the rail pad is reduced in the region of the recess.

17. Rail pad according to any one of claims 15 or 16, wherein the rail pad has webs extending parallel to the rail support with a thickness which is increased in comparison to the remaining rail pad, wherein it is provided in particular that lateral edge regions and/or a central region is provided with an increased thickness.

18. Method for producing a cross-linked rubber composition according to claim 15 or a damping element, in particular a rail pad, according to any one of claims 15 to 17, wherein the vulcanization occurs at 150°C to 180°C, in particular at 170°C,
wherein it is preferably provided that the production occurs in the compression method and the dwelling time in the vulcanization mold is 4 to 20 min, in particular 5 min,
or wherein it is preferably provided that the production occurs in the injection molding method and the dwelling time in the vulcanization mold is 2 to 8 min.

## Revendications

1. Composition de caoutchouc réticulable au soufre pour une couche intermédiaire de rail, dans laquelle le composant polymère comprend un caoutchouc butyle halogéné et au moins un autre caoutchouc sélectionné parmi les élastomères des groupes R ou M qui contiennent au moins une liaison double, dans laquelle le caoutchouc butyle halogéné est contenu dans une quantité de 40 à 60 pce, en particulier 50 pce, dans laquelle au moins un agent de réticulation au soufre est contenu, et dans laquelle au moins un agent de charge lourd avec une densité d'au moins 4 g/cm³ est contenu, dans laquelle la quantité globale d'agent de charge lourd avec une densité d'au moins 4 g/cm³ s'élève de 50 à 100 pce, et dans laquelle au moins un agent de charge léger avec une densité de moins de 4 g/cm³ est contenu, dans laquelle les agents de charge légers présentent une surface spécifique (BET) de 50 m²/g maximum.

2. Composition de caoutchouc réticulable au soufre selon la revendication 1, dans laquelle le caoutchouc butyle halogéné est du caoutchouc bromobutyle.

3. Composition de caoutchouc réticulable au soufre selon la revendication 1 ou 2, dans laquelle l'autre caoutchouc est sélectionné parmi un groupe comprenant du caoutchouc naturel, du polyisoprène synthétique ou du caoutchouc styrène-butadiène, en particulier avec une teneur en styrène de 23,5 % maximum, de préférence avec une teneur en styrène de 15 %.

4. Composition de caoutchouc réticulable au soufre selon la revendication 1 ou 2, dans laquelle l'autre caoutchouc est de l'EPDM, en particulier de l'EPDM avec une teneur en polyéthylène de 45 à 55 %.

5. Composition de caoutchouc réticulable au soufre selon l'une quelconque des revendications 1 à 4, dans laquelle le composant polymère se compose exclusivement du caoutchouc butyle halogéné et de l'autre caoutchouc.

6. Composition de caoutchouc réticulable au soufre selon la revendication 5, dans laquelle le composant polymère se compose exclusivement de caoutchouc butyle halogéné et de caoutchouc naturel ou
dans laquelle le composant polymère se compose exclusivement de caoutchouc butyle halogéné et de polyisoprène synthétique ou
dans laquelle le composant polymère se compose exclusivement de caoutchouc butyle halogéné et de caoutchouc styrène-butadiène avec une teneur en styrène de 23,5 % maximum, en particulier avec une teneur en styrène de 15 % ou
dans laquelle le composant polymère se compose exclusivement de caoutchouc butyle halogéné et d'EPDM avec une teneur en polyéthylène de 45 à 55 %.

7. Composition de caoutchouc réticulable au soufre selon l'une quelconque des revendications 1 à 6, dans laquelle des agents de charge inactifs sont contenus, dans laquelle il est en particulier prévu que des agents de charge inactifs soient exclusivement contenus.

8. Composition de caoutchouc réticulable au soufre selon l'une quelconque des revendications 1 à 7, dans laquelle la substance de remplissage lourde avec une densité d'au moins 4 g/cm³ présente une surface spécifique (BET) de 50 m²/g maximum, dans laquelle il est en particulier prévu que tous les agents de charge présentent une surface spécifique (BET) de 50 m²/g maximum.

9. Composition de caoutchouc réticulable au soufre selon l'une quelconque des revendications 1 à 8, dans laquelle du sulfate de baryum et/ou de l'oxyde de fer et/ou du lithopone est contenu comme agent de charge lourd avec une densité d'au moins 4 g/cm³.

10. Composition de caoutchouc réticulable au soufre selon l'une quelconque des revendications 1 à 9, dans laquelle des agents de charge légers avec une densité de moins de 4 g/cm³ sont contenus avec une teneur globale de 20 à 60 pce.

11. Composition de caoutchouc réticulable au soufre selon la revendication 10, dans laquelle un noir de carbone, en particulier un noir de carbone N550 et/ou N990, est contenu comme agent de charge léger avec une densité de moins de 4 g/cm³.

12. Composition de caoutchouc réticulable au soufre selon l'une quelconque des revendications 10 ou 11, dans laquelle un dérivé d'acide silicique, en particulier un acide silicique traité en surface est contenu comme agent de charge léger avec une densité de moins de 4 g/cm³, dans laquelle il est de préférence prévu que le dérivé d'acide silicique présente une surface spécifique de 50 m²/g maximum.

13. Composition de caoutchouc réticulable au soufre selon l'une quelconque des revendications 1 à 12, dans laquelle un plastifiant, en particulier un plastifiant d'huile minérale est contenu dans une quantité de 0 à 10 pce, en particulier de 2,5 à 7,5 pce.

14. Mélange de caoutchouc réticulé au soufre selon l'une quelconque des revendications 1 à 13.

15. Élément d'amortissement, en particulier couche intermédiaire de rail, fabriqué à partir d'un mélange de caoutchouc réticulé selon la revendication 14, dans lequel il est de préférence prévu que l'élément d'amortissement présente une densité de 1,40 à 1,65 g/cm³ et une dureté de 50 à 65 ShA (à 23 °C).

16. Couche intermédiaire de rail selon la revendication 15, dans laquelle la couche intermédiaire de rail présente au moins deux zones d'épaisseurs différentes, dans laquelle il est de préférence prévu que la couche intermédiaire de rail présente des évidements en forme de rainure s'étendant parallèlement à la semelle de rail au niveau de son côté supérieur et/ou au niveau de son côté inférieur, dans laquelle l'épaisseur de la couche intermédiaire de rail est réduite dans la zone de l'évidement.

17. Couche intermédiaire de rail selon l'une quelconque des revendications 15 ou 16, dans laquelle la couche intermédiaire de rail présente des nervures s'étendant parallèlement à la semelle de rail avec une épaisseur accrue par rapport à la couche intermédiaire de rail restante, dans laquelle il est de préférence prévu que des zones de bord latérales et/ou une zone médiane avec une épaisseur accrue soient prévues.

18. Procédé de fabrication d'une composition de caoutchouc réticulée selon la revendication 15 ou d'un élément d'amortissement, en particulier d'une couche intermédiaire de rail, selon l'une quelconque des revendications 15 à 17, dans lequel la vulcanisation est effectuée entre 150 °C et 180 °C, en particulier à 170 °C,
dans lequel il est de préférence prévu que la fabrication soit effectuée dans le procédé de compression et le temps de séjour dans le moule de vulcanisation soit compris entre 4 et 20 minutes, en particulier s'élève à 5 minutes,
ou dans lequel il est de préférence prévu que la fabrication soit effectuée dans le procédé de moulage par injection et le temps de séjour dans le moule de vulcanisation soit compris entre 2 et 8 minutes.
